# EUROPEAN PATENT APPLICATION

(11) **EP 4 596 066 A1**
(43) Date of publication of application: **06.08.2025**
(21) Application number: 25153352.7
(22) Date of filing: 22.01.2025
(51) Int. Cl.: A63F 13/577, G06T 17/10, G06T 19/20

(54) **INFORMATION PROCESSING PROGRAM, INFORMATION PROCESSING SYSTEM, INFORMATION PROCESSING APPARATUS, AND INFORMATION PROCESSING METHOD**

(30) Priority: 30.01.2024 JP 2024011586
(71) Applicant: Nintendo Co., Ltd., Kyoto 601-8501 (JP)
(72) Inventor: KURIHARA, Tatsuya, Kyoto, 601-8501 (JP); TANAKA, Wataru, Kyoto, 601-8501 (JP); YAMANAKA, Yusaku, Kyoto, 601-8501 (JP); MURATA, Sho, Kyoto, 601-8501 (JP)
(74) Representative: Bardehle Pagenberg Partnerschaft mbB Patentanwälte Rechtsanwälte

(57) **Abstract**

An information processing system generates a mesh of a primary object in a virtual space based on primary voxel data for each primary voxel. When a removal event occurs, the information processing system updates the primary voxel data of a removal target voxel so as to remove at least a portion that corresponds to the removal target voxel where the removal event has occurred. When the removal event occurs, the information processing system determines whether a broken piece generation condition is satisfied based on property data related to the removal target voxel. When it is determined that the broken piece generation condition is satisfied, the information processing system generates sub-voxel data, which is voxel data for a sub-object, and generates a mesh of the sub-object in the virtual space based on the sub-voxel data.

## Description

### BACKGROUND OF THE INVENTION

### Field of the Invention

The present invention relates to an information processing program, an information processing system, an information processing apparatus and an information processing method for generating an object in a virtual space using voxel data.

### Description of the Background Art

There have been conventional techniques for managing an object using voxel data and generating a mesh of the object in a virtual space based on the voxel data (see, for example, "Marching cubes: A high resolution 3D surface construction algorithm", Computer Graphics, Volume 21, Number 4, WE Lorensen, HE Cline, 1987).

In a case where an object based on voxel data is broken, etc., in a virtual space, conventional techniques have problems in generating an object corresponding to the broken portion.

It is therefore an object of the present invention to provide an information processing program, an information processing system, an information processing apparatus and an information processing method capable of generating an object representing a portion of an object that has been broken, etc.

### SUMMARY OF THE INVENTION

The present invention employs the following configurations (1) to (19) to solve the problem mentioned above.
(1) An example of the present invention is an information processing program on a computer of an information processing device. The information processing program causes the computer to function as: primary object generate means, primary voxel update means, broken piece determinine means, sub-object generate means, and image output means. The primary object generate means generates a mesh of a primary obj ect in a virtual space based on primary voxel data for each primary voxel defined in a primary voxel space, which is a voxel space set in the virtual space. The primary voxel update means, when a removal event occurs for at least some of a plurality of primary voxels in the primary voxel space, updates the primary voxel data of a removal target voxel, which is a primary voxel where the removal event has occurred, so as to remove at least a portion of the primary object that corresponds to the removal target voxel. The broken piece determinine means, when the removal event occurs, determines whether a broken piece generation condition is satisfied based on property data related to the removal target voxel among property data that represents a property of a primary object for each primary voxel. The sub-object generate means, when it is determined that the broken piece generation condition is satisfied, generating sub-voxel data and generating a mesh of a sub-object in the virtual space based on the sub-voxel data, the sub-voxel data being voxel data of the sub-object defined for each sub-voxel defined in a sub-voxel space, and the sub-voxel space being set in the virtual space and different from the primary voxel space. The image output means outputs, to a display device, an image of the mesh of the primary object and the mesh of the sub-object in the virtual space.

With configuration (1) above, it is possible to generate an object that represents a portion of the primary object that has been broken, for example, by sub-voxel data relates to the sub-voxel space different from the primary voxel space.

(2)
The information processing program may further cause the computer to function as appearance set means. The appearance set means setts a color and/or pattern of a mesh of the primary object based on appearance data that defines the color and/or pattern of the primary object for each primary voxel.

With configuration (2) above, it is possible to set a color and/or pattern of the primary object for each primary voxel by using the appearance data.

(3)
The appearance data may be data representing a texture. The appearance set means may apply the texture represented by the appearance data related to a certain primary voxel to a mesh, of the meshes of the primary object, that is generated based on the voxel data of the certain primary voxel.

With configuration (3) above, it is possible to set a texture to be applied to the primary object for each primary voxel by using the appearance data.

(4)
The sub-object generate means may determine, based on the appearance data set for a removed portion of the primary object, the appearance data set for the sub-voxel related to the sub-object may be determined.

With configuration (4) above, it is possible to generate a sub-object having an appearance in accordance with the appearance of the removed portion of the primary object.

(5)
The sub-object generate means may determine, based on the property data set for a removed portion of the primary object, the property data set for the sub-voxel related to the sub-object may be determined.

With configuration (5) above, it is possible to generate a sub-object having a property in accordance with the property of the removed portion of the primary object.

(6)
The information processing program may further cause the computer to function as number determine means. The number determine means determines, based on a type of the removal event that has occurred, the number of sub-objects to be generated. When it is determined to generate a plurality of sub-objects, the sub-object generate means determines may generate the sub-voxel data related to each sub-object for each of the sub-voxel spaces independent of each other, and may generate a mesh of the sub-object may be generated in the virtual space based on the sub-voxel data.

With configuration (6) above, the number of sub-objects to be generated can be set in detail for each type of the removal event.

(7)
The broken piece determinine means may execute, based on a type of the removal event that has occurred, setting of a condition to be used as the broken piece generation condition and/or the determination of whether the broken piece generation condition is satisfied.

With configuration (7) above, it is possible to have variations, depending on the type of the removal event, for the condition for generating a sub-object and/or the sub-object generation result.

(8)
When the removal event occurs caused by an impact-imparting event in which an impact is imparted on the primary object, the broken piece determinine means may determinine the type of the removal event based on a type of the impact-imparting event.

With configuration (8) above, it is possible to have variations, depending on the type of the impact-imparting event, for the condition for generating a sub-object and/or the sub-object generation result.

(9)
The broken piece determinine means may determinine that different types of removal events have occurred between when a first impact-imparting event occurs caused by an action of making a collision object held by a player object collide with the primary object and when a second impact-imparting event occurs caused by an action in which the player object moves a collision object toward the primary object to cause the collision object to collide with the primary object.

With configuration (9) above, the sub-object generation result can be varied depending on the action by the player object.

(10)
When an event in which the sub-object collides with the primary object is performed as the impact-imparting event, the broken piece determinine means may determinine whether the removal event has occurred.

With configuration (10) above, it is possible to use a sub-object, which is obtained by removing the primary object, to further remove the primary object, and it is possible to improve the strategic aspect of the game regarding the removal of the primary obj ect.

(11)
The property data may represent a strength of the primary object. The broken piece determinine means may determinine, based on a strength depending on the type of the removal event that has occurred and a strength that is represented by the property data set for the removal target voxel where the removal event has occurred, whether the broken piece generation condition is satisfied.

With configuration (11) above, the sub-object generation result can be varied depending on the type of the removal event and the property of the primary object.

(12)
The property data may represent a strength of the primary object. When an impact-imparting event that imparts an impact on the primary object is performed, the broken piece determinine means may determine, based on a strength of the impact-imparting event, which is set according to the type of the impact-imparting event, and a strength represented by the property data, which is set for the primary voxel where the impact-imparting event has been performed, whether the removal event occurs.

With configuration (12) above, whether the removal event occurs can be varied depending on the type of the impact-imparting event and the property of the primary object.

(13)
The sub-object generate means may generate sub-voxel data so that the sub-object has a size in accordance with the type of the removal event that has occurred.

With configuration (13) above, the size of the sub-object can be set in detail for each type of the removal event.

(14)
When it is determined that the broken piece generation condition is satisfied, the sub-object generate means may generate a removed portion object that represents a removed portion of the primary object, and may generate the sub-object by splitting the removed portion object into a plurality of pieces.

With configuration (14) above, it is possible to generate the sub-object in conformity with the shape of the removed portion of the primary object.

(15)
The sub-object generate means may generate the sub-voxel data so that of all objects obtained by splitting the removed portion object into a plurality of pieces, an object that is larger than a lower limit value and smaller than an upper limit value is the sub-object.

With configuration (15) above, it is possible to reduce the possibility that sub-objects that are too large or too small are generated.

(16)
When the sub-object collides with the primary object, the primary object generate means may update the primary voxel data based on the sub-voxel data so that a portion corresponding to the sub-object is added to the primary object in the primary voxel space.

With configuration (16) above, two objects of different voxel spaces (e.g., the primary object and the sub-object) can be integrated into one object defined by the primary voxel data.

(17)
The sub-object generate means may set the sub-voxel space in which a voxel of which a length of one side is shorter than the primary voxel is defined as the sub-voxel.

With configuration (17) above, the shape of the sub-object based on the sub-voxel data can be represented in more detail than the primary object based on the primary voxel data.

(18)
The sub-object generate means sets directions of coordinate axes in the sub-voxel space independently of directions of coordinate axes in the primary voxel space.

With configuration (18) above, it is easier to place the sub-object in any orientation in the virtual space.

(19)
The primary object may be a terrain object placed in the virtual space.

With configuration (19) above, it is possible to generate an object that represents a portion of the terrain object that has been broken, for example.

Note that the present specification discloses an example of an information processing apparatus (e.g., a terminal device or a server) and an information processing system including all or some of the various means recited in (1) to (19) above. The present specification also discloses an example of an information processing method (specifically, the game process method) by which the information processing system executes the various processes recited in (1) to (19) above.

With the information processing program, the information processing system, the information processing apparatus and the information processing method set forth above, it is possible to generate an object that represents a portion of an object that has been broken, for example.

These and other features, aspects and advantages of the present invention will become more apparent from the following detailed description of the present invention when taken in conjunction with the accompanying drawings.

### BRIEF DESCRIPTION OF THE DRAWINGS

FIG. 1 is a view showing an example of a game system;
FIG. 2 is a block diagram showing an example of an internal configuration of a main body apparatus;
FIG. 3 is a block diagram showing an example of an internal configuration of a main body apparatus, a left controller and a non-limiting right controller;
FIG. 4 is a view showing an example of a terrain object, which is a voxel object;
FIG. 5 is a view showing before and after the deletion of a portion of the terrain object shown in FIG. 4;
FIG. 6 is a view showing before and after the deletion of a portion of the terrain object shown in FIG. 4;
FIG. 7 is a diagram showing an example of content of voxel data and content of material information;
FIG. 8 is a diagram showing an example of property information representing properties of materials;
FIG. 9 is a diagram showing an example of texture information representing textures of materials;
FIG. 10 is a diagram showing a method for generating a mesh;
FIG. 11 is a view showing an example of a game image including a terrain obj ect;
FIG. 12 is a view showing an example of how the player object performs a punch action on a terrain object;
FIG. 13 is a view showing an example of a terrain object a portion of which has been broken by a punch action by the player object;
FIG. 14 is a view showing an example of a terrain object and a broken piece obj ect;
FIG. 15 is a diagram showing an example of broken piece generation information;
FIG. 16 is a view showing an example of a method for generating broken piece obj ects;
FIG. 17 is a view showing an example of how the player object throws a broken piece object at a terrain object;
FIG. 18 is a view showing an example of how an addition is made to a terrain object as a result of a broken piece object contacting the terrain object;
FIG. 19 is a diagram showing an example of various data used in information processes performed on a game system;
FIG. 20 is a flow chart showing an example of the flow of a game process to be executed by a game system;
FIG. 21 is a sub-flow chart showing an example of the detailed flow of a removal process of step S6 shown in FIG. 20; and
FIG. 22 is a sub-flow chart showing an example of the detailed flow of an addition process of step S8 shown in FIG. 20.

### DESCRIPTION OF THE PREFERRED EMBODIMENTS

### [1. Configuration of game system]

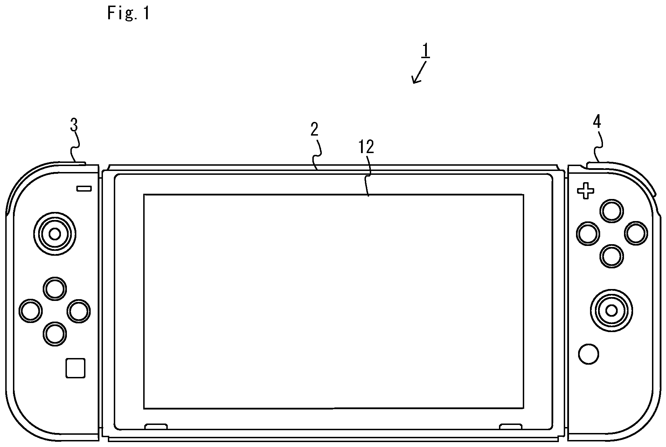

A game system according to an example of an exemplary embodiment is described below. FIG. 1 is an external view of the game system 1. An example of a game system 1 according to the exemplary embodiment includes a main body apparatus (an information processing apparatus; which functions as a game apparatus main body in the exemplary embodiment) 2, a left controller 3, and a right controller 4. The main body apparatus 2 is an apparatus for performing various processes (e.g., game processing) in the game system 1. Each of the left controller 3 and the right controller 4 is an apparatus including operation sections with which a user provides inputs.

Each of the left controller 3 and the right controller 4 is attachable to and detachable from the main body apparatus 2. That is, the game system 1 can be used as a unified apparatus obtained by attaching each of the left controller 3 and the right controller 4 to the main body apparatus 2. Further, in the game system 1, the main body apparatus 2, the left controller 3, and the right controller 4 can also be used as separate bodies. It should be noted that hereinafter, the left controller 3 and the right controller 4 will occasionally be referred to collectively as a "controller".

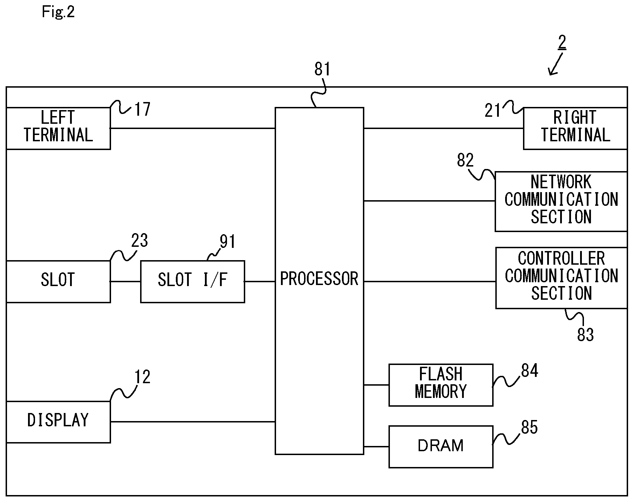

FIG. 2 is a block diagram showing an example of the internal configuration of the main body apparatus 2. The main body apparatus 2 includes components 17, 21, 23, 81 to 85, and 91 shown in FIG. 2 in addition to the components shown in FIG. 1. Some of the components 17, 21, 23, 81 to 85, and 91 may be mounted as electronic components on an electronic circuit board and accommodated in the housing 11.

The main body apparatus 2 includes the display 12. The display 12 displays an image generated by the main body apparatus 2. In the exemplary embodiment, the display 12 is a liquid crystal display device (LCD). The display 12, however, may be a display device of any type.

Further, the main body apparatus 2 includes a left terminal 17, which is a terminal for the main body apparatus 2 to perform wired communication with the left controller 3, and a right terminal 21, which is a terminal for the main body apparatus 2 to perform wired communication with the right controller 4.

The main body apparatus 2 includes a processor 81. The processor 81 is an information processing section for executing various types of information processing to be executed by the main body apparatus 2. For example, the processor 81 may be composed only of a CPU (Central Processing Unit), or may be composed of a SoC (System-on-a-chip) having a plurality of functions such as a CPU function and a GPU (Graphics Processing Unit) function. The processor 81 executes an information processing program (e.g., a game program) stored in a storage section (specifically, an internal storage medium such as a flash memory 84, an external storage medium attached to the slot 23, or the like), thereby performing the various types of information processing.

The main body apparatus 2 includes a flash memory 84 and a DRAM (Dynamic Random Access Memory) 85 as examples of internal storage media built into the main body apparatus 2. The flash memory 84 and the DRAM 85 are connected to the processor 81. The flash memory 84 is a memory mainly used to store various data (or programs) to be saved in the main body apparatus 2. The DRAM 85 is a memory used to temporarily store various data used for information processing. The DRAM 85 and flash memory 84 are illustrative non-limiting examples of non-transitory computer-readable storage media.

The main body apparatus 2 includes a slot 23. The slot 23 is so shaped as to allow a predetermined type of storage medium to be attached to the slot 23. The predetermined type of storage medium is, for example, a dedicated storage medium (e.g., a dedicated memory card) for the game system 1 and an information processing apparatus of the same type as the game system 1. The predetermined type of storage medium is used to store, for example, data (e.g., saved data of an application or the like) used by the main body apparatus 2 and/or a program (e.g., a program for an application or the like) executed by the main body apparatus 2.

The main body apparatus 2 includes a slot interface (hereinafter abbreviated as "I/F") 91. The slot I/F 91 is connected to the processor 81. The slot I/F 91 is connected to the slot 23, and in accordance with an instruction from the processor 81, reads and writes data from and to the predetermined type of storage medium (e.g., a dedicated memory card) attached to the slot 23.

The processor 81 appropriately reads and writes data from and to the flash memory 84, the DRAM 85, and each of the above storage media, thereby performing the above information processing.

The main body apparatus 2 includes a network communication section 82. The network communication section 82 is connected to the processor 81. The network communication section 82 communicates (specifically, through wireless communication) with an external apparatus via a network. In the exemplary embodiment, as a first communication form, the network communication section 82 connects to a wireless LAN and communicates with an external apparatus, using a method compliant with the Wi-Fi standard. Further, as a second communication form, the network communication section 82 wirelessly communicates with another main body apparatus 2 of the same type, using a predetermined communication method (e.g., communication based on a unique protocol or infrared light communication). It should be noted that the wireless communication in the above second communication form achieves the function of enabling so-called "local communication" in which the main body apparatus 2 can wirelessly communicate with another main body apparatus 2 placed in a closed local network area, and the plurality of main body apparatuses 2 directly communicate with each other to transmit and receive data.

The main body apparatus 2 includes a controller communication section 83. The controller communication section 83 is connected to the processor 81. The controller communication section 83 wirelessly communicates with the left controller 3 and/or the right controller 4. The communication method between the main body apparatus 2 and the left controller 3 and the right controller 4 is optional. In the exemplary embodiment, the controller communication section 83 performs communication compliant with the Bluetooth (registered trademark) standard with the left controller 3 and with the right controller 4.

The processor 81 is connected to the left terminal 17 and the right terminal 21. When performing wired communication with the left controller 3, the processor 81 transmits data to the left controller 3 via the left terminal 17 and also receives operation data from the left controller 3 via the left terminal 17. Further, when performing wired communication with the right controller 4, the processor 81 transmits data to the right controller 4 via the right terminal 21 and also receives operation data from the right controller 4 via the right terminal 21. As described above, in the exemplary embodiment, the main body apparatus 2 can perform both wired communication and wireless communication with each of the left controller 3 and the right controller 4.

Further, the display 12 is connected to the processor 81. The processor 81 displays a generated image (e.g., an image generated by executing the above information processing) and/or an externally acquired image on the display 12.

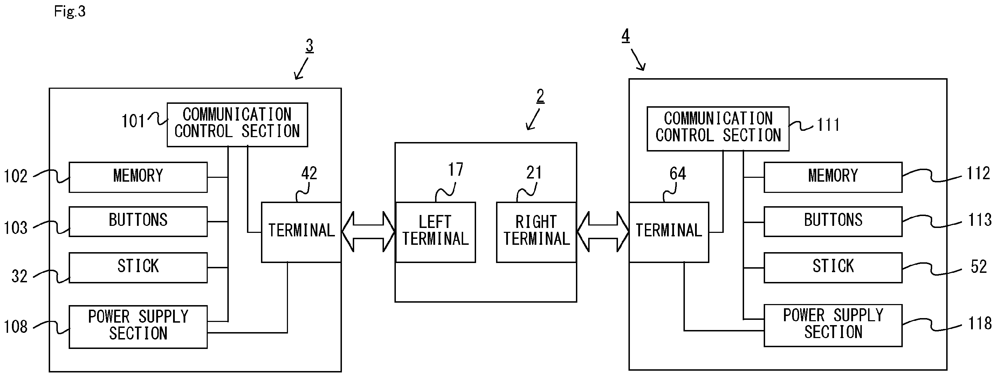

FIG. 3 is a block diagram showing examples of the internal configurations of the main body apparatus 2, the left controller 3, and the right controller 4. It should be noted that the details of the internal configuration of the main body apparatus 2 are shown in FIG. 2 and therefore are omitted in FIG. 3.

The left controller 3 includes a terminal 42 for the left controller 3 to perform wired communication with the main body apparatus 2. The left controller 3 includes a communication control section 101, which communicates with the main body apparatus 2. As shown in FIG. 3, the communication control section 101 is connected to components including the terminal 42. In the exemplary embodiment, the communication control section 101 can communicate with the main body apparatus 2 through both wired communication via the terminal 42 and wireless communication not via the terminal 42. The communication control section 101 controls the method for communication performed by the left controller 3 with the main body apparatus 2. When the left controller 3 is attached to the main body apparatus 2, the communication control section 101 communicates with the main body apparatus 2 via the terminal 42. Further, when the left controller 3 is detached from the main body apparatus 2, the communication control section 101 wirelessly communicates with the main body apparatus 2 (specifically, the controller communication section 83).

Further, the left controller 3 includes a memory 102 such as a flash memory. The communication control section 101 includes, for example, a microcomputer (or a microprocessor) and executes firmware stored in the memory 102, thereby performing various processes.

The left controller 3 includes one or more buttons 103. Further, the left controller 3 includes the analog stick ("stick" in FIG. 3) 32. Each the buttons 103 and the analog stick 32 outputs information regarding an operation performed on itself to the communication control section 101 repeatedly at appropriate timing.

The communication control section 101 acquires information regarding an input (specifically, information regarding an operation) from each of input sections (specifically, the buttons 103 and the analog stick 32). The communication control section 101 transmits operation data including the acquired information (or information obtained by performing predetermined processing on the acquired information) to the main body apparatus 2. It should be noted that the operation data is transmitted repeatedly, once every predetermined time. It should be noted that the interval at which the information regarding an input is transmitted from each of the input sections to the main body apparatus 2 may or may not be the same.

The above operation data is transmitted to the main body apparatus 2, whereby the main body apparatus 2 can obtain inputs provided to the left controller 3. The main body apparatus 2 can determine operations on the buttons 103 and the analog stick 32 based on the operation data.

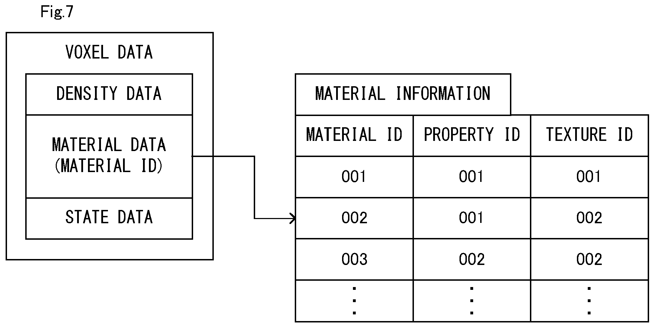

The left controller 3 includes a power supply section 108. In the exemplary embodiment, the power supply section 108 includes a battery and a power control circuit. Although not shown in FIG. 7, the power control circuit is connected to the battery and also connected to components of the left controller 3 (specifically, components that receive power supplied from the battery).

As shown in FIG. 3, the right controller 4 includes a communication control section 111, which communicates with the main body apparatus 2. Further, the right controller 4 includes a memory 112, which is connected to the communication control section 111. The communication control section 111 is connected to components including the terminal 64. The communication control section 111 and the memory 112 have functions similar to those of the communication control section 101 and the memory 102, respectively, of the left controller 3. Thus, the communication control section 111 can communicate with the main body apparatus 2 through both wired communication via the terminal 64 and wireless communication not via the terminal 64 (specifically, communication compliant with the Bluetooth (registered trademark) standard). The communication control section 111 controls the method for communication performed by the right controller 4 with the main body apparatus 2.

The right controller 4 includes input sections similar to the input sections of the left controller 3. Specifically, the right controller 4 includes buttons 113, the analog stick 52. These input sections have functions similar to those of the input sections of the left controller 3 and operate similarly to the input sections of the left controller 3.

The right controller 4 includes a power supply section 118. The power supply section 118 has a function similar to that of the power supply section 108 of the left controller 3 and operates similarly to the power supply section 108.

### [2. Outline of process on game system]

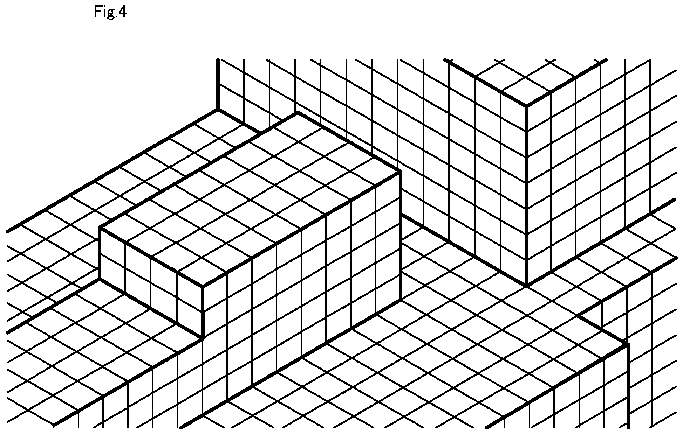

Next, referring to FIG. 4 to FIG. 18, an outline of the process performed on the game system 1 will be described. In the present embodiment, the game system 1 generates a game image in which terrain objects and characters (e.g., the player object controlled by the player) are arranged in a game space, which is a three-dimensional virtual space, and displays the game image on a display device. Note that in the present embodiment, the display device on which the game image is displayed may be the display 12 described above, or may be a display device different from the display 12 (e.g., a stationary or movable monitor connected to the game system 1).

### [2-1. Voxel]

In the present embodiment, for some objects in the game space, the shape is defined by voxel data. Here, voxels are rectangular parallelepiped (more specifically, cubic) regions arranged in a grid pattern in the game space, and voxel data is data that is set for each voxel. Hereinafter, an object whose shape is defined by voxel data will be referred to as a "voxel object". In the present embodiment, the game system 1 stores voxel data for each of a plurality of voxels that are set in the game space as data for generating voxel objects in the game space.

FIG. 4 is a view showing an example of a terrain object, which is a voxel object. As shown in FIG. 4, in the present embodiment, a terrain object representing a terrain such as a ground surface has its shape defined by voxel data. The cubes shown in FIG. 4 represent a terrain object. Note that in FIG. 4, voxel boundaries are indicated by thin lines and edges of the terrain object are indicated by thick lines. However, these lines are added for the purpose of making the drawings easier to understand, and there is no need in practice for lines indicating voxel boundaries to be displayed, and there is no need for edges of the terrain object to be drawn thick.

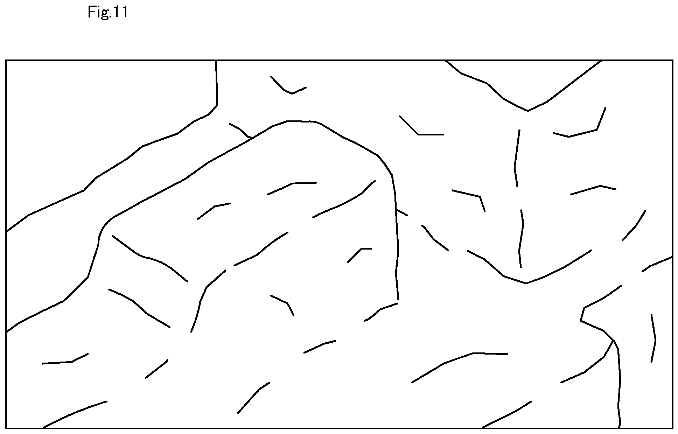

For example, the terrain object shown in FIG. 4 is generated by the following rule: "a cube is placed at the position of a voxel if a parameter (specifically, the density as will be described below) included in the voxel data set for the voxel is greater than a predetermined value, and nothing is placed at the position of the voxel if the parameter is less than or equal to the predetermined value". In FIG. 4, a terrain object generated by this rule is shown for the purpose of illustrating the relationship between voxels and voxel objects in an easy-to-understand manner. Note however that in the present embodiment, in practice, a voxel object is generated by such a rule that results in a terrain object having a complicated shape in comparison with the cubic voxels, such as a terrain object shown in FIG. 11 to be described below, for example. Note that there is no limitation on the rule for determining the shape of the voxel object based on the voxel data. In other embodiments, the game system 1 may generate a voxel object as shown in FIG. 4 based on the voxel data or may generate a voxel object as shown in FIG. 11 based on the voxel data.

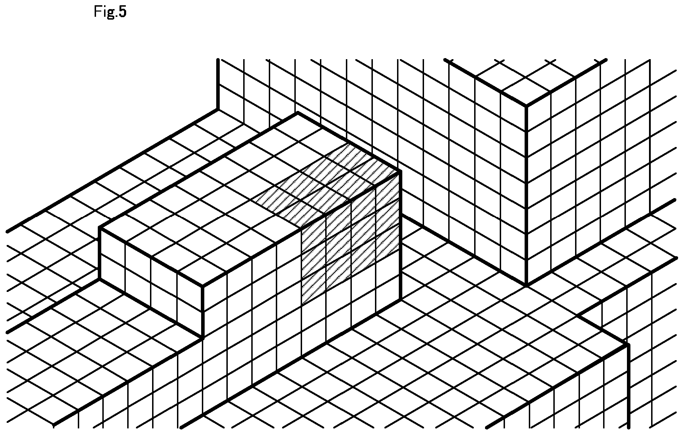

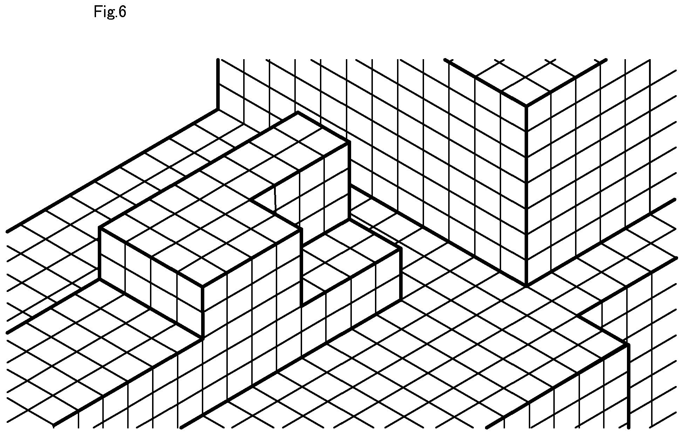

It is possible to change the shape of a voxel object by changing voxel data of voxels. FIG. 5 and FIG. 6 are views showing before and after the removal of a portion of the terrain object shown in FIG. 4. For example, when the hatched portion of the terrain object shown in FIG. 5 is removed, the terrain object changes to a shape as shown in FIG. 6. In such a case, the game system 1 can easily delete the terrain object by rewriting the voxel data so as to indicate that the terrain object is absent for voxels in the hatched portion. Note that also when making an addition to the terrain object, as when deleting the terrain object, the game system 1 can easily change the shape of the terrain object by changing the voxel data of voxels.

Thus, the game system 1 can freely change the shape of a voxel object by rewriting the voxel data. For example, the shape of a terrain object may be changed as a result of the terrain object in a game being broken for some reason (e.g., the player object striking the terrain object). In such a case, the game system 1 can freely change the shape of the terrain object by changing the voxel data used to generate the terrain object, rather than directly changing data representing the outer shape of the terrain object (e.g., the mesh to be described below).

FIG. 7 is a diagram showing an example of content of voxel data and content of material information. Here, in the present embodiment, the game space can be divided into a plurality of voxels arranged in a grid pattern. The game system 1 stores voxel data for each voxel in the game space so that the voxel data is associated with the voxel. The voxel data represents, for example, the presence/absence of a voxel object in the voxel corresponding to the voxel data.

As shown in FIG. 7, voxel data includes density data. The density data represents the density, which is an index used to define the shape of a voxel object in the voxel corresponding to the voxel data (specifically, the shape defined by the mesh to be described below). As will be described in detail below, the position and the shape of the surface of the voxel object (e.g., the mesh to be described below) are determined based on this density. In other words, in the present embodiment, this density is used to generate a mesh that defines the surface of the voxel object.

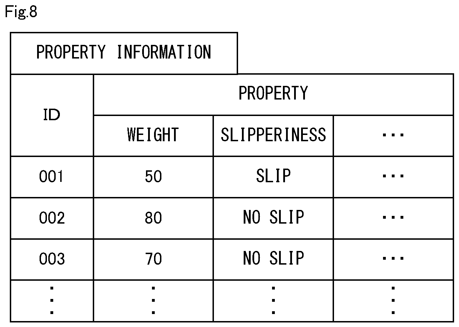

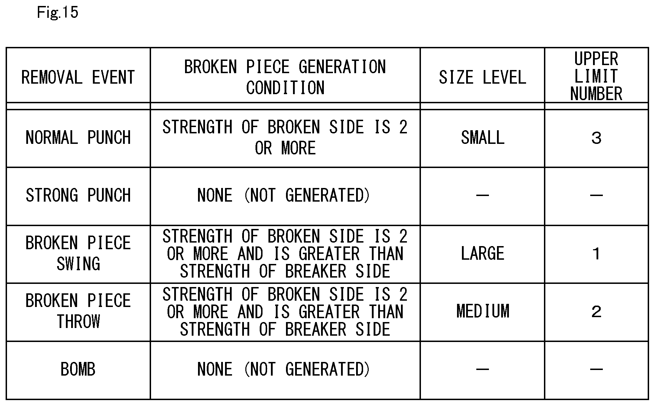

In the present embodiment, the density can take an integer value in the range from the lower limit value (e.g., 0) to the upper limit value (e.g., 255). In the present embodiment, the game system 1 determines the shape of a voxel object based on the density such that the proportion of the volume to be occupied by the voxel object in a voxel tends to be higher when the density value set for the voxel is higher and that the proportion tends to be lower when the density value is lower. Thus, the density is an index that affects the proportion of the volume to be occupied by the voxel object in the voxel. The density can also be said to be an index that represents the degree to which an object is included in the region defined by each voxel. For example, if the density is 0, there is no voxel object in the voxel, if the density is 255, the inside of the voxel is entirely the voxel object, and if the density is between 0 and 255, the inside of the voxel is occupied by the voxel object to the proportion that is determined based on the density value. Then, the shape of the mesh, e.g., the shape of the voxel object, can determined based on the density. Note however that the voxel object generated based on the density does not need to have a volume that exactly matches the proportion represented by the density. For example, the method of generating a voxel object as shown in FIG. 8 and the method of generating a voxel object as shown in FIG. 15 may differ in the volume of the voxel object, even if they are based on the same density.

In other embodiments, the density may indicate either a state in which the voxel object occupies the entirety of the region within the voxel or a state in which no voxel object is included in the region within the voxel. For example, the density data may be data that can take only 0 or 1.

As shown in FIG. 7, voxel data includes material data. The material data represents the material (in other words, the substance) of the voxel object generated by the voxel data. Here, in the present embodiment, materials such as sand, rock and soil, for example, are set for voxel objects. For example, in the present embodiment, a plurality of types of materials are provided as materials that can be set for a voxel object, and one of the materials is set for a voxel object.

As shown in FIG. 7, in the present embodiment, the material data represents the identification information of the material (referred to as "material ID"). In the present embodiment, the game system 1 stores material information representing the property and the texture of the material for each material provided in the game (see FIG. 7). In the present embodiment, the material information represents associations between the material ID, the property of the material and the appearance (specifically, the texture) of the material. Specifically, the material information is information that represents associations between the material ID, identification information of the property of the material (referred to as "property ID") and identification information of the texture of the material (referred to as "texture ID") (see FIG. 7).

FIG. 8 is a diagram showing an example of property information representing properties of materials. As shown in FIG. 8, the game system 1 stores property information that associates each property ID with information that represents the content of the property represented by the property ID. A property of a material is a property of a voxel object for which the material is set in the game (which can be said to be a property that can affect the progress of the game), and it may be information such as weight or slipperiness shown in FIG. 8, for example. Note that a property of a material, as used herein, means not to include information regarding the appearance such as the texture, etc. For example, the following information may be set as properties of a material.
· Temperature
· Breakability (e.g., the number of times of impact impartation needed to break a voxel object)
· Whether another object can be bonded to a voxel object
· Amount of hit points to be regained by the player object when the player object breaks a voxel object
· Amount of in-game currency to be gained by the player object when the player object breaks a voxel object

Note that there is no limitation on the specific content of the property to be set for a material. In other embodiments, information different from those listed above may be set as information that represents a property of a material.

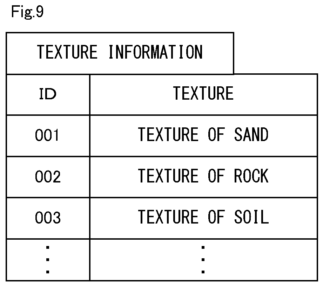

FIG. 9 is a diagram showing an example of texture information representing textures of materials. As shown in FIG. 9, the game system 1 stores texture information that associates the texture ID with the texture represented by the texture ID.

Note that in addition to information of texture, any information regarding the color and/or pattern may be set as data that defines the appearance of a voxel object. For example, a pattern of cracks may be set as information regarding the appearance of a voxel object. By using such a pattern, the game system 1 can generate an image of a voxel object that represents the appearance of cracks.

As described above, in the present embodiment, the material data defines, by the material ID, the property of the voxel object and the texture used for the voxel object. For example, when the material ID represented by the material data included in the voxel data is "002", the property represented by the property ID "001" that is associated with the material ID in the material information is set as the property of the voxel object corresponding to the voxel data (see arrow shown in FIG. 7). In this case, the texture that is represented by the texture ID "002" associated with the material ID in the material information is applied to the voxel object corresponding to the voxel data (see arrow shown in FIG. 7).

As described above, in the present embodiment, the game system 1 separately manages the property and the texture of the material. Therefore, in the present embodiment, by setting a set of a property and a texture in the material information, it is possible to easily set a plurality of types of materials having the same property but having different appearances (e.g., different textures) or set a plurality of types of materials having different properties but having the same appearance.

Note that the material data may be any data with which it is possible to identify the property and/or the texture of the material. For example, in other embodiments, the material data may represent the property ID and the texture ID, or may have a data structure that actually includes data representing the property and the texture of the material.

The material data may further represent information related to the material other than the property and the texture described above. For example, the material data may include special effect data that represents the special effect to be triggered upon satisfaction of a special effect triggering condition set for the voxel object (e.g., a portion of the voxel object being broken, or the character stepping on the voxel object). Note that the special effect data may be data that represents a special effect image (e.g., a special effect image showing the voxel object being broken), or may be data that represents a special effect sound (a sound of footstep when the character walks on the voxel object).

As shown in FIG. 7, the voxel data includes state data that represents the state of the voxel object. There is no limitation on the specific content of the state data. For example, the state data may be data that represents whether the voxel object is in a wet state, or may be data that represents the amount of damage applied to the voxel object. The content of the state data may be updated during the game.

### [2-2. Mesh]

In the present embodiment, the surface of the voxel object is represented by a mesh. A mesh is a set of faces (specifically, polygons) placed in the game space. In the present embodiment, the game system 1 generates a mesh for the voxel object based on the voxel data of each voxel set in the game space. An example of how a mesh is generated based on voxel data will now be described.

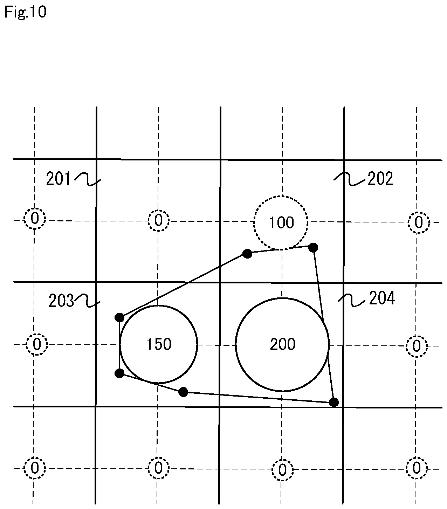

FIG. 10 is a diagram showing an example method for generating a mesh. Note that in FIG. 10, voxels and meshes are represented in two dimensions for the purpose of making the drawing easier to understand and for the sake of discussion, but in practice, a three-dimensional mesh is generated based on voxels in a three-dimensional space.

As described above, in the present embodiment, the density set for the a voxel is in the range of 0 to 255. In the present embodiment, voxels with densities equal to or greater than the reference value are considered to be inside the voxel object, and voxels with densities less than the reference value are considered to be outside the voxel object. It is not necessary to define only voxels with a density of 0 as being outside the voxel object (e.g., reference value = 1), and the reference value may be set to 128, for example. In the example shown in FIG. 10, a voxel 201 and the other outer voxels have a density of 0, a voxel 202 has a density of 100, which is less than the reference value, and voxels 203 and 204 have densities of 150 and 200, which are greater than the reference value. In the present embodiment, the game system 1 generates vertices between those voxels whose densities are equal to or greater than the reference value and those voxels whose densities are less than the reference value. Specifically, for each region (region delimited by dotted lines) that straddles eight (four in the figure) adjacent voxels, it is determined whether or not to generate a vertex. That is, a vertex is generated in each region that straddles both a voxel whose density is equal to or greater than the reference value and a voxel whose density is less than the reference value. Then, a polygon mesh is generated by connecting together adjacent vertices if the connection (the boundary between the regions including the vertices) passes through a voxel whose density is equal to or greater than the reference value and a voxel whose density is less than the reference value. The coordinates of each vertex are determined by comparing densities of adjacent voxels and interpolating based on the difference in density for each of the XYZ axes. In this process, the coordinates can be further calculated based on the normal information. The normal information may be stored in advance for at least some of the voxels, or if not stored, the normal information may also be calculated based on densities between adjacent voxels. Note that in FIG. 10, the density of the voxel 202 is less than the reference value, the voxel 202 is treated as being outside the voxel object in the determination of the presence/absence of a vertex, but the density value itself of the voxel 202 is used to calculate the coordinates of the vertices generated. If the reference value were set to a value lower than the density of the voxel 202, it would result in an increase in the vertices on the upper right side and the upper left side in the voxel 202 of FIG. 10.

By generating a polygon mesh as described above, it is possible to generate a shape whose volume reflects the density of each voxel to some extent. Note however that depending on the relationship with neighboring voxels, it is possible that a voxel with a density of 0 may partially include a region inside the voxel object, or a voxel with a density of 255 may partially include a region outside the voxel object. Since voxels with densities less than the reference value are treated as being outside the voxel object in the present embodiment, there are fewer vertices as compared with a case where those voxels are treated as being inside the voxel object, the volume will be smaller accordingly. There is no need to calculate the polygon mesh so that the volume strictly corresponds to the density value.

FIG. 11 shows an example of a game image including a terrain object. In the present embodiment, by generating a mesh as described above, the voxel object can be made in a shape with complicated irregularities compared to the cubic voxels, for example.

Note that there is no limitation on the method of generating a mesh based on voxel data. For example, in other embodiments, if the density of the voxel data is greater than a predetermined value, a mesh may be generated so that a cube is placed in the voxel corresponding to the voxel data (see FIG. 4).

For each face of the mesh generated as described above, the game system 1 determines the appearance (e.g., color and/or pattern) of each such face according to the material identified by the voxel data. Specifically, the game system 1 determines the texture to be used for rendering each face of the mesh based on the voxel data, and maps the determined texture to each face to generate an image of the voxel object. Note that the texture to be mapped to each face of the mesh is determined based on the voxel data of the voxel used to generate the face (which will be referred to as the generation target voxel) among the voxels where the voxel object exists. Note that the generation target voxel is, for example, one or more voxels located around the face, although it depends on the mesh generation method. That is, the texture mapped to a face of the mesh is determined to be a texture corresponding to the material set for one or more voxels placed around the face.

Note that in other embodiments, one voxel data may include multiple types (e.g., two types) of material data. In such a case, the voxel data includes ratio data related to the multiple types of material data. The ratio data is data for determining the texture to be used for the voxel object, and represents the ratio by which each of the materials (specifically, the texture corresponding to the material) represented by the multiple types of material data influences the appearance (specifically, the color and/or pattern) of the voxel object. When determining the texture to be mapped to each face of the mesh, the texture is determined based on various data (specifically, density data, multiple types of material data and ratio data) included in the voxel data of the generation target voxel. For example, when multiple types of materials are set for a generation target voxel corresponding to one face, a texture corresponding to the (one type of) material with the greatest degree of influence may be used while taking the ratio into consideration, or textures corresponding to multiple types of materials may be used while taking the ratio into consideration.

In other embodiments, there may be both voxel objects for which voxel data including one type of material data is used, and voxel objects for which voxel data including two types of material data is used.

As described above, in the present embodiment, the game system 1 sets the color and/or pattern of the mesh of the voxel object based on appearance data (specifically, a texture ID representing a texture) that defines the color and/or pattern of the voxel object for each voxel. Specifically, for a mesh to be generated based on voxel data of a certain voxel, among meshes of voxel objects, the game system 1 applies the texture represented by the appearance data for the voxel to the mesh of the voxel object that is generated based on the voxel data for the certain voxel. Thus, it is possible to set the color and/or pattern of the voxel object using the appearance data set for the voxel.

### [2-3. Broken piece object]

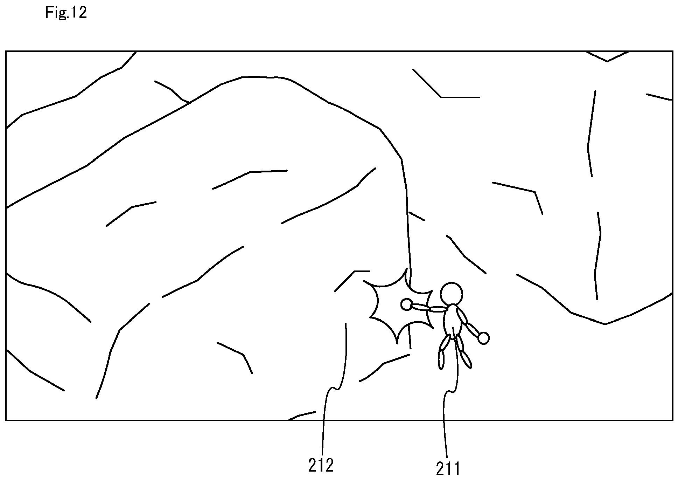

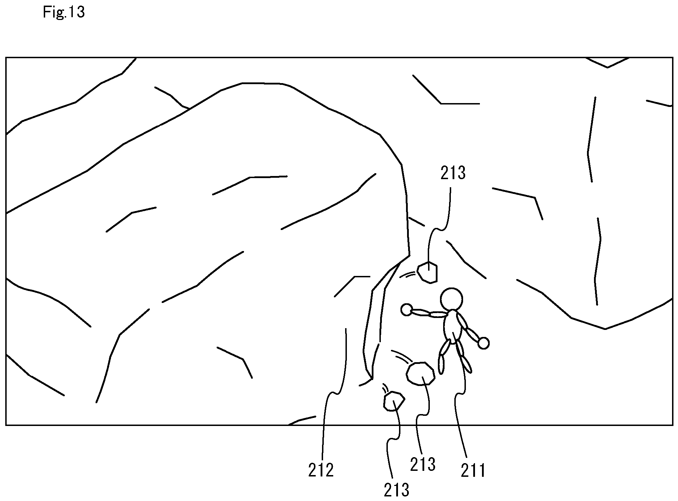

Next, the case where a broken piece object is generated for a terrain object, which is a voxel object, will be described. FIG. 12 is a view showing an example of how the player object performs a punch action on a terrain object. FIG. 13 is a view showing an example of a terrain object a portion of which has been broken by a punch action by the player object. As shown in FIG. 12 and FIG. 13, in the present embodiment, when an impact is applied to a terrain object 212 by a punch action, etc., by a player object 211, the terrain object 212 may be broken and, as a result, a portion of the terrain object 212 may be removed. Hereafter, an event in which a portion of the terrain object 212 is removed is referred to as a removal event. The removal event is not limited to be caused by a punch action by the player object 211, but may be caused by another action by the player object 211, or by a collision event, etc., in which another object collides with the terrain object 212.

In the present embodiment, when the terrain object 212 is removed, a broken piece object 213 representing a broken piece of the terrain object 212 may be generated (see FIG. 13). For example, if the terrain object 212 represents a rocky area as shown in FIG. 13, the broken piece object 213 is generated that imitates a piece of rock. Thus, the game system 1 can more realistically represent the breaking of a terrain object by making a broken piece object appear in the game space when the terrain object is removed.

### [2-3-1. Primary voxel space and sub-voxel space]

In the present embodiment, the broken piece object is a voxel object whose shape is defined by voxel data, as is the terrain object. Note however that in the present embodiment, the shape of the broken piece object is defined by voxel data for a voxel different from the terrain object. Hereafter, the voxel space related to the terrain object is called "primary voxel space", a voxel in the primary voxel space is called "primary voxel", and voxel data set for the primary voxel are called "primary voxel data". On the other hand, the voxel space related to the broken piece object is called "sub-voxel space", a voxel in the sub-voxel space is called "sub-voxel", and voxel data set for the sub-voxel is called "sub-voxel data". In the present embodiment, the shape of the terrain object is defined by the primary voxel data and the shape of the broken piece object is defined by the sub-voxel data.

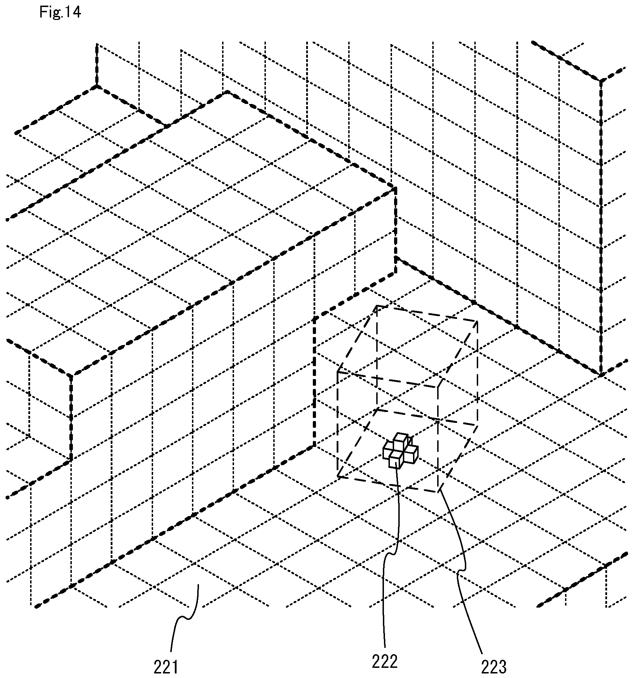

FIG. 14 is a view showing an example of a terrain object and a broken piece object. Note that for the purpose of clearly showing the difference between primary voxels and sub-voxels, FIG. 14 shows voxel objects whose meshes are generated by the same rules as when the mesh of the terrain object shown in FIG. 4 is generated (e.g., a terrain object 221 and a broken piece object 222). That is, the voxel object shown in FIG. 14 is assumed to be a voxel object for which a mesh is generated by the following rule: "a cube is placed at the position of a voxel if the density set for the voxel is greater than a predetermined value, and nothing is placed at the position of the voxel if the density is less than or equal to the predetermined value". Note that in FIG. 14, for the purpose of making the drawing easier to understand, the terrain object 221 is shown by a dotted line, the broken piece object 222 is shown by a solid line, and an area 223 of the sub-voxel space is shown by a broken line.

As described above, for the terrain object 221, the shape is defined by the primary voxel data. Note that it is assumed in the present embodiment that the primary voxel space is set for the entire game space (therefore, the range of the primary voxel space is not shown in FIG. 14).

On the other hand, for the broken piece object 222, the shape is defined by the sub-voxel data. Here, in the present embodiment, the sub-voxel space is set for a portion of the game space (which can be said to be a portion of the primary voxel space). Note that in the example shown in FIG. 14, the area 223 indicated by the broken line is the range where the sub-voxel space is set. The shape of the broken piece object 222 is defined by the sub-voxel data set for each sub-voxel set in the sub-voxel space. The broken piece object 222 will be placed within the range of the sub-voxel space.

In the present embodiment, the length of one side of a sub-voxel is set to be shorter than the length of one side of a primary voxel (see FIG. 14). That is, the game system 1 sets a sub-voxel space in which voxels of which the length of one side is shorter than primary voxels are defined as sub-voxels. According to this, the shape of a broken piece object based on sub-voxel data can be represented in more detail than a terrain object based on primary voxel data. For example, as with the broken piece object 222 shown in FIG. 14, a broken piece object that is smaller than one primary voxel is likely to be generated, and a broken piece object with irregularities smaller than one primary voxel is likely to be generated. Note that in other embodiments, the length of one side of a sub-voxel may be the same as the length of one side of a primary voxel, or may be longer than the length of one side of a primary voxel.

In the present embodiment, the game system 1 sets directions of the coordinate axes in the sub-voxel space (e.g., the orientations of the sides of a sub-voxel) independently of directions of the coordinate axes in the primary voxel space (e.g., the orientations of the sides of a primary voxel). For example, in the example shown in FIG. 14, the directions of the coordinate axes in the sub-voxel space are different from the directions of the coordinate axes in the primary voxel space. Thus, it is easier to place a broken piece object in any orientation in the game space. For example, it is easier to place a broken piece object so as to extend in a direction different from the coordinate axes in the primary voxel space. It is easier to move (e.g., rotate) a broken piece object independently of the terrain object.

Note that the game system 1 can change the position of a broken piece object (more accurately, its position in the game space) by changing the position of the sub-voxel space in the game space. The game system 1 can change the attitude (more accurately, its attitude in the game space) of a broken piece object by changing the attitude of the sub-voxel space relative to the game space.

In the present embodiment, when a plurality of broken piece objects are generated, the game system 1 sets a sub-voxel space for each broken piece object. Thus, it is possible to set the position and attitude of the sub-voxel spaces in the game space for each sub-voxel space. It is easier to generate a plurality of broken piece objects that have different shapes (e.g., a plurality of broken piece objects with shapes extending in different directions from each other). The sub-voxel spaces may be arranged so that a portion of a sub-voxel space overlaps with a portion of another sub-voxel space. In other embodiments, a plurality of broken piece objects may be set in one sub-voxel space.

Note that the method of generating a mesh of a broken piece object based on sub-voxel data may be the same as or different from the method of generating a mesh of the terrain object based on primary voxel data.

### [2-3-2. Removal of terrain object]

In the present embodiment, a terrain object may be removed when an impact-imparting event is performed on the terrain object. An impact-imparting event is an event in which an impact is imparted on a terrain object, for example, a breaking action event in which a breaking action is performed by the player object on a terrain object, or a collision event in which another object (called a collision object) collides with a terrain object. The breaking action is an action by the player object to break a terrain object, such as the punch action described above, for example. For example, a collision event is an event where when a character such as the player object performs an action of holding and swinging a collision object or an action of throwing a collision object (these actions can also be said to be breaking actions), the collision object collides with a terrain object. Note that the collision object may be any object placed in the game space, for example, it may be a weapon owned by the player object, or a broken piece object may function as a collision object (which will be described in detail below).

Note that impact-imparting events that can delete the terrain object are not limited to those described above. For example, if the player object can use a bomb as an item, an event where a bomb explodes near the terrain object may occur as an impact-imparting event, and the terrain object may be removed in response to the event.

In the present embodiment, when the impact-imparting event is performed, the game system 1 determines whether a removal condition is satisfied. Here, in the present embodiment, the terrain object has a strength set for each voxel, and the impact-imparting event also has a strength set according to the type of the impact-imparting event. The type of an impact-imparting event is determined differently, for example, depending on the type of the breaking action performed in the impact-imparting event or the type of the collision object that collided with the terrain object in the impact-imparting event. The game system 1 determines whether the removal condition is satisfied based on the strength. Note that in the present embodiment, the strength of the terrain object is set as one of the material properties described above, for example. That is, the property ID can be said to be data representing the strength of the terrain object. In the present embodiment, the strength may take an integer value from 1 to the upper limit value.

In the present embodiment, the removal condition is set in accordance with the relationship between the strength A of the breaker side (e.g., the impact-imparting event) and the strength B of the broken side (e.g., the terrain object). Specifically, the game system 1 determines the removal condition as described in (a) to (c) below.
(a) If the strength A of the breaker side is equal to or greater than the strength B of the broken side (when A≥B), it is determined that the removal condition is satisfied.
(b) If the value obtained by adding 1 to the strength A of the breaker side is equal to the strength B of the broken side (A+1=B), a damage in accordance with the type of the breaking action and the type of the collision object is imparted on the terrain object, and it is determined that the removal condition is satisfied if the damage to the terrain object is equal to or greater than a reference value.
(c) If the value obtained by adding 1 to the strength A of the breaker side is less than the strength B of the broken side (A+1<B), no damage is imparted on the terrain object (the removal condition is therefore not satisfied).

Note that in the present embodiment, the damage to the terrain object is managed for each primary voxel. For example, the game system 1 stores data representing the damage value for each primary voxel as the state data included in the primary voxel data.

Therefore, in the present embodiment, if the strength A of the breaker side is equal to or greater than the strength B of the broken side (case (a)), the removal condition is satisfied as a result of the impact-imparting event occurring. If the strength A of the breaker side is slightly less than the strength B of the broken side (case (b)), the removal condition is satisfied as a result of the impact-imparting event occurring multiple times at the same position of the terrain object (e.g., the same primary voxel). That is, in such a case, a certain portion of the terrain object is removed when a certain number of impact-imparting events occur on the certain portion of the terrain object. If the strength A of the breaker side is significantly smaller than the strength B of the broken side (case (c)), the removal condition will not be satisfied even if an impact-imparting event occurs.

The game system 1 makes a determination of the removal condition for each primary voxel. Specifically, when an impact-imparting event is performed, for each primary voxel within the range corresponding to the impact-imparting event, the removal condition is determined based on the strength of the impact-imparting event and the strength set for the primary voxel. The range corresponding to the impact-imparting event is, for example, the range of influence of the breaking action, which is set according to the breaking action, or the range of influence of the collision event, which is set according to the type of the collision event. Specifically, when a punch action is performed as a breaking action, the position at which the punch of the player object hits the terrain object and a predetermined range including this position are the "range corresponding to the impact-imparting event".

As described above, in the present embodiment, when an impact-imparting event that imparts an impact to a primary object (e.g., a terrain object) is performed, the game system 1 determines whether the removal condition is satisfied (e.g., whether a removal event will occur) based on the strength of the impact-imparting event, which is set according to the type of the impact-imparting event, and the strength represented by the strength data, which is set for the primary voxel where the impact-imparting event has been performed. Then, the presence/absence of occurrence of a removal event may vary depending on the strength of the primary object even though the same impact-imparting event is performed, and the presence/absence of occurrence of a removal event may vary depending on the strength of the impact-imparting event even though an impact-imparting event is performed on the same primary object. This makes the occurrence of removal events in response to impact-imparting events more natural.

When it is determined that the removal condition is satisfied, the game system 1 executes a removal event to delete a portion of the terrain object. In the removal event, the game system 1 deletes a portion of the terrain object in a removal target voxel, which is defined as a primary voxel in the range corresponding to the impact-imparting event. Specifically, the game system 1 sets the density to 0 in the removal target voxel. The game system 1 deletes a portion of the terrain voxel also for voxels around the removal target voxel (e.g., voxels a portion of which overlaps with the range, or voxels that are adjacent to the removal target voxel). Specifically, the game system 1 decrements the density of voxels around the removal target voxel based on a predetermined rule. Note that there is no limitation on the content of this rule. For example, the game system 1 decrements the density in the surrounding voxels so that the shape of the terrain object after removal will not be unnatural at the boundary between the removal target voxel and the surrounding voxels.

Note that there is no limitation on the method for deleting the terrain object in the removal event. For example, in other embodiments, the game system 1 may only delete the terrain object for removal target voxels in the range corresponding to the impact-imparting event. For example, the game system 1 may define removal target voxels as voxels at least a portion of which is included in the range corresponding to the impact-imparting event.

The size and/or shape of the "range corresponding to the impact-imparting event" may be set for each type of the impact-imparting event. For example, the range may be set differently for a case where the impact-imparting event is an event caused by a punch action by the player object and for a case where the impact-imparting event is an event caused by collision of a particular collision object with the terrain object.

### [2-3-3. Broken piece generation condition]

When a removal event occurs, the game system 1 determines whether the terrain object to be removed satisfies a broken piece generation condition. Here, in the present embodiment, the game system 1 stores broken piece generation information that represents various information related to the generation of broken piece objects, and based on the broken piece generation information, the game system 1 executes processes related to the generation of broken piece objects (e.g., the process of determining the broken piece generation condition, and the process of generating a broken piece).

FIG. 15 is a diagram showing an example of broken piece generation information. As shown in FIG. 15, the broken piece generation information associates the type of the removal event with various information related to the generation of broken piece objects (specifically, the broken piece generation condition, the size of the broken piece object, and the maximum number of broken piece objects).

In the example shown in FIG. 15, examples of the types of removal events are "normal punch", "strong punch", "broken piece swing", "broken piece throw" and "bomb". A "normal punch" refers to a removal event caused by an impact-imparting event through a normal punch action by the player object. A "strong punch" refers to a removal event caused by an impact-imparting event through a punch action of a higher power than normal by the player object. Thus, the type of the removal event (which can be said to be the type of the impact-imparting event) varies depending on the type of the breaking action. A "broken piece swing" refers to a removal event caused by a collision event caused by an action in which the player object holds and swings a broken piece object as a collision object (e.g., a broken piece swing action). A "broken piece throw" refers to a removal event caused by a collision event caused by an action in which the player object throws a broken piece object as a collision object (e.g., a broken piece throw action). Thus, the type of the removal event (which can also be said to be the type of the impact-imparting event) also depends on the type of the collision event. A "bomb" also refers to a removal event caused by the explosion of a bomb. As described above, the type of the removal event varies depending on the type of the impact-imparting event.

In the present embodiment, as shown in FIG. 15, the broken piece generation information represents the presence/absence of the broken piece generation condition and the content of the broken piece generation condition for each type of the removal event. In the example shown in FIG. 15, when the type of removal event is a "normal punch", the broken piece generation condition is that "the strength of the broken side is 2 or more". That is, when a removal event of a "normal punch" occurs, the game system 1 generates a broken piece if the strength of the broken side (e.g., the terrain object) is 2 or more. When the type of removal event is a "broken piece swing" or a "broken piece throw", the broken piece generation condition is that "the strength of the broken side is 2 or more and the strength of the broken side is greater than the strength of the breaker side". Thus, in the present embodiment, (the content of) the broken piece generation condition varies depending on the type of the removal event.

In the present embodiment, the strength of the broken side used for the determination of the broken piece generation condition is the strength that is set for the removal target voxel (e.g., the strength that is represented by the property ID represented by the voxel data of the removal target voxel). Note that when there are a plurality of types of strength values set for a plurality of removal target voxels, the game system 1 may determine the strength of the broken side based on the plurality of types of strength values. For example, the game system 1 may use, as the strength of the broken side, the average value, the minimum value or the maximum value of the plurality of types of strength values.

In the example shown in FIG. 15, if the type of the removal event is a "strong punch" or a "bomb", the broken piece generation condition is not set. That is, when a removal event of a "strong punch" or a "bomb" occurs, the game system 1 does not generate a broken piece. Thus, in the present embodiment, it is determined whether or not to generate a broken piece depending on the type of the removal event. Note that in other embodiments, the broken piece generation information may be set so that a broken piece is always generated when a particular type of removal event occurs.

As described above, in the present embodiment, the content of the broken piece generation condition varies depending on the type of the removal event. That is, the game system 1 sets a condition to be used as the broken piece generation condition based on the type of the removal event that has occurred. In the present embodiment, whether a broken piece is generated (e.g., the result of determination of the broken piece generation condition) varies depending on the type of the removal event. That is, the game system 1 determines whether the broken piece generation condition is satisfied based on the type of the removal event that has occurred. Note that in other embodiments, the game system 1 may execute, based on the type of the removal event that has occurred, only one of setting the condition to be used as the broken piece generation condition and determining whether the broken piece generation condition is satisfied. Thus, it is possible to have variations in the condition for generating a broken piece based on the type of the removal event. Moreover, the condition for generating a broken piece can be set in detail for each type of the removal event.

Note that in the present embodiment, when a removal event occurs caused by an impact-imparting event, the game system 1 determines the type of the removal event based on the type of the impact-imparting event. That is, it can be said that the broken piece generation condition varies depending on the type of the impact-imparting event, or it can be said that whether a broken piece is generated varies depending on the type of the impact-imparting event. Therefore, in the present embodiment, it is possible to have variations in the condition for generating a broken piece based on the type of the impact-imparting event, and the condition for generating a broken piece can be set in detail for each type of the impact-imparting event.

In the present embodiment, the game system 1 determines that different types of removal events have occurred when a first impact-imparting event occurs caused by an action of making a collision object held by the player object collide with the primary object (e.g., a broken piece swing action) and when a second impact-imparting event occurs caused by an action in which the player object moves a collision object toward the primary object to cause the collision object to collide with the primary object (a broken piece throw action). Then, even though the same collision object collides with the primary object, the broken piece object generation result may be varied depending on the action by the player object.

In the present embodiment, the game system 1 determines whether the broken piece generation condition is satisfied based on the strength depending on the type of the removal event that has occurred (e.g., the strength of the impact-imparting event) and the strength that is represented by the property data set for the removal target voxel where the removal event has occurred. Even though the same removal event is performed, the broken piece object generation result may vary depending on the strength of the primary object, and even though the removal event is performed on the same primary object, the broken piece object generation result may vary depending on the strength of the removal event. Thus, the broken piece object generation result may be varied depending on the property (specifically, the strength) of the breaker side and the broken side. This makes the generation of broken piece objects in response to removal events more natural.

### [2-3-4. Generation of broken piece object]

When the broken piece generation condition is satisfied, the game system 1 generates broken piece objects. In the present embodiment, when generating broken piece objects, the game system 1 first determines the size level of broken piece objects and the upper limit number of broken piece objects. In the present embodiment, as shown in FIG. 15, in the broken piece generation information, each type of the removal event is associated with a size level and an upper limit number of broken piece objects. The game system 1 determines the size level and the upper limit number of broken piece objects based on the type of the removal event and the broken piece generation information.

Note that in the present embodiment, the size level of the broken piece object is determined to be one of the three levels of large, medium and small. The game system 1 generates broken piece objects so that the sizes of the broken piece objects actually generated are within the range corresponding to the determined level. For example, broken piece objects are generated so that the sizes thereof are in the range of 160 to 300 when the size level is "large", in the range of 30 to 120 when the size level is "medium", and in the range of 5 to 12 when the size level is "small". Thus, in the present embodiment, ranges corresponding to different levels are set so as not to overlap with each other. Thus, it is easy for the user to recognize the size level of a broken piece obj ect generated. For example, when different processes are to be executed depending on the size level of the broken piece object, it is advantageous that it is easy to recognize the size level of the broken piece object generated as described above.

As described above, in the present embodiment, the game system 1 generates a sub-object (e.g., generate sub-voxel data) so that the sub-object (e.g., a broken piece object) has a size in accordance with the type of the removal event that has occurred. Thus, the size of the broken piece object can be varied depending on the type of the removal event, and the size of the broken piece object can be set in detail for each type of the removal event. Note that the game system 1 may determine the size based on other information instead of the type of the removal event (or in addition to the type of the removal event). For example, in other embodiments, the size may be determined based on the property (e.g., strength) of the object of the breaker side and/or broken side.

In the present embodiment, the game system 1 determines the number (specifically, the upper limit number) of sub-objects (e.g., broken piece objects) to be generated based on the type of the removal event that has occurred. Thus, it is possible to have variations in the number of broken piece objects to be generated based on the type of the removal event. The number of broken piece objects to be generated can be set in detail for each type of the removal event. Note that the game system 1 may determine the number based on other information instead of the type of the removal event (or in addition to the type of the removal event). For example, in other embodiments, the number may be determined based on the property (e.g., strength) of the object of the breaker side and/or broken side.

In other embodiments, the game system 1 may determine other information related to broken piece objects, instead of the size level and the number (or in addition to the size level and the number) based on the type of the removal event and/or other information. For example, the direction in which a broken piece object is to fly off may be determined based on the type of the removal event.

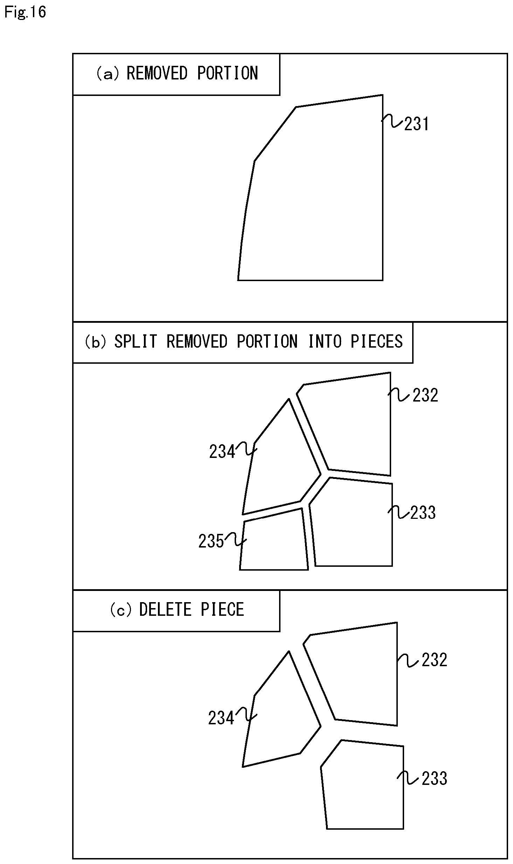

After the size level and the upper limit number of broken piece objects are determined as described above, the game system 1 generates broken piece objects. In the present embodiment, the game system 1 generates a broken piece object based on a portion of the voxel object to be removed (specifically, by splitting the removed portion). Referring to FIG. 16, an example of a method for generating broken piece candidate objects will now be described.

FIG. 16 is a view showing an example of a method for generating broken piece objects. In the present embodiment, the game system 1 first generates a removed portion object 231 corresponding to a portion of the terrain object that is removed by the removal event (see section (a) in FIG. 16). Next, the game system 1 splits the removed portion object 231 to generate a plurality of split objects (four split objects 232 to 235 in FIG. 16) (see section (b) in FIG. 16). Note that there is no limitation on the specific method of splitting, but the removed portion object 231 may be split by Voronoi split, for example. Note that the game system 1 may perform the splitting based on the size level determined as described above (e.g., so that the sizes of at least some of the split objects are within the range corresponding to the level). Alternatively, the game system 1 may perform the splitting based on the upper limit number determined as described above (e.g., so that the number of split objects is equal to the upper limit number or equal to a number obtained by adding a predetermined number to the upper limit number).

Next, the game system 1 deletes some of the plurality of split objects 232 to 235 obtained by the splitting as needed (see section (c) in FIG. 16). Specifically, the game system 1 may delete some split objects of the plurality of split objects 232 to 235 that are outside the range corresponding to the size level determined as described above. Alternatively, the game system 1 may delete some split objects of the plurality of split objects 232 to 235 so that the number thereof is less than or equal to the upper limit number determined as described above. Note that in the example shown in FIG. 16, the split object 235 is deleted, of the four split objects 232 to 235. In the present embodiment, of the plurality of split objects 232 to 235, those objects 232 to 234 that are not deleted become broken piece objects. Thus, it is possible to generate broken piece objects so that the determined size level and the determined number are satisfied. Note that when a plurality of split objects obtained by splitting satisfy the determined size level and the determined number, the game system 1 does not need to execute the process of deleting split objects.

The process of splitting the removed portion object described above may be performed using sub-voxel data or may be performed by using a mesh. That is, the game system 1 may generate broken piece objects represented by sub-voxel data by splitting a removed portion object represented by the sub-voxel data, or may generate a broken piece object composed of a mesh by splitting a removed portion object composed of a mesh. In the former case, in order to generate split objects by Voronoi split, for example, the process of determining one of a plurality of generating points that is closest to a sub-voxel may be executed for each sub-voxel, and split objects may be generated by regarding one or more sub-voxels belonging to one generating point as being one split object. Then, split broken piece objects are represented by sub-voxel data. On the other hand, in the latter case, since a broken piece object obtained by splitting is composed of a mesh, the game system 1 generates sub-voxel data of the broken piece object based on the mesh of the broken piece obj ect.

As described above, in the present embodiment, when it is determined that the broken piece generation condition is satisfied, the game system 1 generates a removed portion object that represents a portion of a primary object (e.g., the terrain object) that has been removed, and generates sub-objects (e.g., broken piece objects) by splitting the removed portion object into a plurality of objects. Thus, it is possible to generate broken piece objects in conformity with the shape of the removed portion of the primary object.

The game system 1 generates sub-voxel data so that of all the objects (the split objects 232 to 235 shown in FIG. 16) obtained by splitting the removed portion object, those that are larger than the lower limit value and smaller than the upper limit value are sub-objects (e.g., broken piece objects). Thus, it is possible to reduce the possibility that broken piece objects that are too large or too small are generated. Moreover, it is possible to reduce the process burden on the game system 1 by reducing the number of broken piece objects to be generated.

As described above, in the present embodiment, when a plurality of broken piece objects are generated, the game system 1 sets a sub-voxel space for each broken piece object. That is, when it is determined to generate a plurality of broken piece objects, the game system 1 generates sub-voxel data related to broken piece objects for each of a plurality of sub-voxel spaces independent of each other. Then, although the details will be described later, based on each sub-voxel data, the game system 1 generates a mesh for the sub-object in the virtual space.

Note that the game system 1 sets a sub-voxel space related to a broken piece object as follows, for example. For example, the position of a sub-voxel space is set based on the position at which the removal event has occurred (e.g., the position at which the terrain object has been removed). The attitude of the sub-voxel space is set based on the orientation of the removed portion of the terrain object with respect to the non-removed portion. The size of the sub-voxel space may be determined based on the type of a removal event that has led to the generation of the broken piece object, may be determined based on the size of the broken piece object, or may be determined based on the property (e.g., the strength) of the object of the breaker side and/or broken side.

In the present embodiment, the length of one side of a sub-voxel in each sub-voxel space for each broken piece object is predetermined, and is equal among different sub-voxel spaces. Note however that in other embodiments, the length of one side of a sub-voxel in each sub-voxel space may be set for each broken piece object. For example, in other embodiments, the length of one side of a sub-voxel may be determined based on the type of the removal event, may be determined based on the size of the broken piece object, or may be determined based on the property (e.g., the strength) of the object of the breaker side and/or broken side.

For example, the length of one side of a sub-voxel may be set to be different for each broken piece object by the process to be described now. Specifically, if the size of a split object obtained by splitting the removed portion object described above is not included in any of the size level ranges described above, the game system 1 may perform a correction of enlarging or shrinking the split object so as to be in one of the size level ranges, thus using the corrected split object as the broken piece object. Then, the game system 1 may correct the size of the split object by correcting the size of the sub-voxel space of the split object. Thus, when the size of the sub-voxel space is corrected, the length of one side of the sub-voxel may vary for each broken piece object.

When the broken piece object is generated, the game system 1 generates a mesh for the broken piece object, which is a sub-voxel object, in addition to the terrain object, which is a primary voxel object. In such a case, when generating the game image, the game system 1 generates an image representing the game space including the primary voxel object and the broken piece object.

Here, in the present embodiment, a material is set (specifically, a property and a texture are set) also for a broken piece object as well as for a terrain object. In the present embodiment, the material of the broken piece object is set based on the material of the original terrain object (specifically, the material of the portion that is removed when the broken piece object is generated). Specifically, where one type of a material is used in the removed portion of the terrain object, the material of the broken piece object is set to be the same as the material of the original terrain object. That is, the property of the broken piece object is set to be the same as the property of the original terrain object, and the texture of the broken piece object is set to be the same as the texture of the original terrain object. Where a plurality of types of materials are used in the removed portion of the terrain object, the material of the broken piece object may be set to be the same as the material that is included in the removed portion at a highest proportion, or the material of the broken piece object may be set so as to be the same as the material at the position at which the impact-imparting event occurred (e.g., the position of contact with the collision object). Note that in other embodiments, the property and/or texture of the broken piece object may be set so as to be different from the property and/or texture of the original terrain object based on the property and/or texture of the original terrain object.

As described above, in the present embodiment, the game system 1 determines the appearance data (e.g., the texture ID) set for a sub-voxel related to a sub-object (e.g., a broken piece object) based on the appearance data set for a removed portion of the primary object (e.g., the terrain object). The game system 1 determines the property data (e.g., the property ID) set for a sub-voxel related to a sub-object (e.g., a broken piece object) based on the appearance data set for a removed portion of the (e.g., the terrain object). Thus, it is possible to generate a broken piece object having the property and/or appearance in accordance with the terrain object removed.

In the present embodiment, the state data included in the sub-voxel data related to the broken piece object is set to a predetermined initial value. Note however that in other embodiments, the state data related to the broken piece object may be set based on the content represented by the state data of the original terrain object (e.g., so that it will be equal to the content).

Note that when a broken piece object is generated, the game system 1 makes a broken piece object appear at the position at which the terrain object is removed in the game space, and then moves the broken piece object in the fly-off direction from this position. Thus, it is possible to render broken pieces flying off in response to the breaking of the terrain object. Note that the fly-off direction may be determined based on the type of the removal event, may be determined based on the property of the object of the breaker side and/or broken side, or may be determined to be a predetermined direction.

As described above, in the present embodiment, when a broken piece object is generated following removal of a terrain object, the broken piece object will be placed in the game space. Here, in the present embodiment, the player object can break the terrain object using the broken piece object placed in the game space. The player object can break the terrain object by the broken piece swing action or the broken piece throw action described above. Thus, in the present embodiment, a broken piece object is handled as a collision object described above. Specifically, when an event occurs as an impact-imparting event, in which a sub-object (e.g., a broken piece object) collides with a primary object (e.g., a terrain object), the game system 1 determines whether or not a removal event has occurred. Thus, the player object can use a broken piece object, which is obtained by breaking a terrain object, to further break the terrain object, and it is possible to improve the strategic aspect of the game regarding the breaking of the terrain object, thus improving the playability of the game.

### [2-3-5. Addition to terrain object by broken piece object]

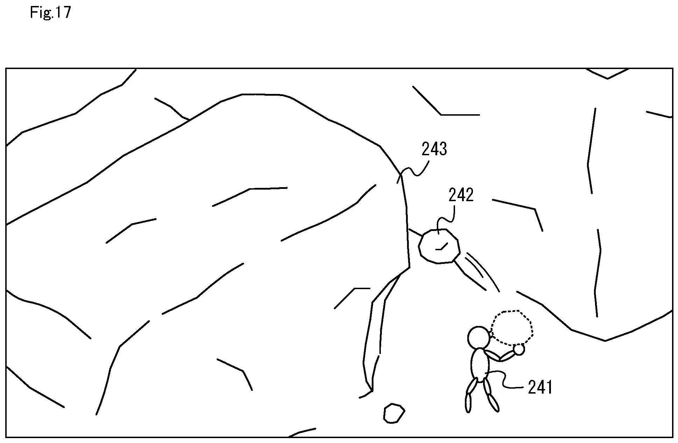

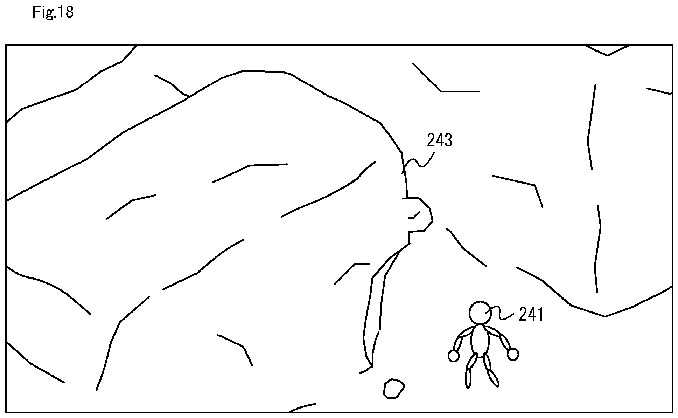

Next, referring to FIG. 17 and FIG. 18, a case where an addition is made to a terrain object by a broken piece object will be described. FIG. 17 is a view showing an example of how the player object throws a broken piece object at the terrain object. FIG. 18 is a view showing an example of how an addition is made to the terrain object as a result of a broken piece object contacting the terrain object. In the present embodiment, as shown in FIG. 17 and FIG. 18, as a result of a player object 241 throwing a broken piece object 242 at a terrain object 243, the broken piece object 242 may contact the terrain object 243. In such a case, under a certain condition, the game system 1 changes the shape of the terrain object 243 (see FIG. 18) into a shape as if the broken piece object 242 is connected to the terrain object 243 (e.g., an addition is made to the terrain object 243 by the broken piece object 242). The process of making an addition to the terrain object by the broken piece object will now be described.

When a broken piece object contacts a terrain object, the game system 1 first determines whether an addition condition is satisfied. Note that the example shown in FIG. 17 and FIG. 18 shows an example case where the broken piece object 242 contacts the terrain object 243 as a result of the player object 241 throwing the broken piece object 242, there is no limitation on the event by which the broken piece object contacts the terrain object.

Although there is no limitation on the specific content of the addition condition, for example, it may be a condition related to the material of two objects (e.g., the broken piece object and the terrain object) contacting each other, or it may be a condition related to the property of the two obj ects. Specifically, the addition condition may be that one or both objects have a property that enables them to be added to another object, may be that the materials of the two objects contacting each other have a particular combination, or may be that the strengths of the two objects contacting each other are in a predetermined relationship. Note that the addition condition is set so that the addition condition and the removal condition described above are not satisfied at the same time.

When the addition condition is satisfied, the game system 1 changes the shape of the terrain object based on the contacting broken piece object so that an addition is made to the terrain object that is contacted by the broken piece object. For example, the game system 1 updates the primary voxel data so as to change the shape of the terrain object.

Specifically, the game system 1 determines, from among different primary voxels in the primary voxel space, a primary voxel where an addition is made to the terrain object (referred to as an addition target voxel"). The addition target voxel is determined based on the position at which the broken piece object and the terrain object contact each other and the shape of the broken piece object. For example, the primary voxel corresponding to the position of contact, and the primary voxel that overlaps with the broken piece object (e.g., the primary voxel where the broken piece object is present) at the point of contact are to be the addition target voxel.

For the determined addition target voxel, the game system 1 may make an addition to the terrain object by increasing the density represented by the voxel data. Then, the game system 1 adjusts the value by which the density is increased so that the shape of the additional portion is in accordance with the shape of the broken piece object. Thus, the game system 1 can change the shape of the terrain object into a shape that is obtained by connecting the broken piece object to the terrain object, and it is possible to render how the broken piece object is connected to the terrain object.

Note that the game system 1 deletes the broken piece object from the game space as an addition is made to the terrain object. Since the broken piece object is deleted, the game system 1 also removes the sub-voxel space itself of the broken piece object (the sub-voxel space is no longer set).

As described above, in the present embodiment, when a sub-object (e.g., a broken piece object) collides with a primary object (e.g., a terrain object), the game system 1 updates the primary voxel data based on the sub-voxel data so that a portion corresponding to the sub-object is added to the primary object in the primary voxel space. Thus, two objects of different voxel spaces (e.g., the terrain object and the broken piece object) can be integrated into one object defined by the primary voxel data. Since the player object can add to the terrain object as well as remove the terrain object, it is possible to increase the variety of choices that can be taken by the player object in the game, thus improving the strategic aspect of the game.

### [3. Specific example of process performed on game system]

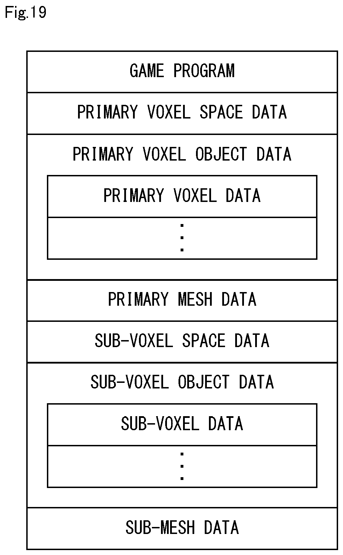

Next, referring to FIG. 19 to FIG. 22, a specific example of information processes performed on the game system 1 will be described.

FIG. 19 is a diagram showing an example of various data used in information processes performed on the game system 1. As shown in FIG. 19, the game system 1 stores a game program, primary voxel space data, primary voxel object data, primary mesh data, sub-voxel space data, sub-voxel object data and sub-mesh data. The game program and the primary voxel space data are data stored in advance on the game system 1 before executing the game process. The game program and the primary voxel space data are stored in a storage medium attached to the slot 23 of the main body apparatus 2, for example. The primary voxel object data, the primary mesh data, the sub-voxel space data, the sub-voxel object data and the sub-mesh data are data that are generated during execution of the game process. These data are stored in the DRAM 85 of the main body apparatus 2, for example.

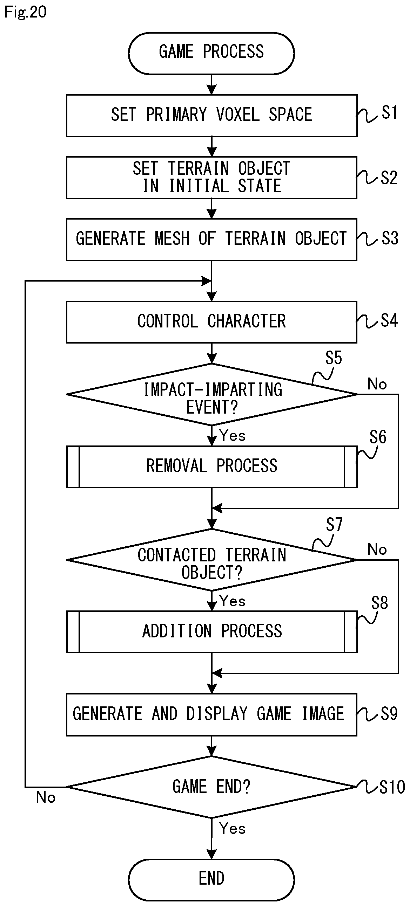

The game program is a game program for executing a game process (specifically, the game process shown in FIG. 20) in the present embodiment.

The primary voxel space data is data that defines a primary voxel space set in the game space. Specifically, the primary voxel space data represents the length of one side of the primary voxel, the direction of each side of the primary voxel in the game space. Where the primary voxel space is set only in a partial region of the game space, the primary voxel space data may include data (e.g., data representing the range of the game space in which the primary voxel is set) that represents the position and the size of the space in which the primary voxel is set (e.g., the primary voxel space).

The primary voxel object data is data that represents the primary object (e.g., the terrain object) arranged in the game space. Specifically, the primary voxel object data includes primary voxel data for each unit region for a partial or entire range of the game space.

The primary mesh data is data that represents the mesh set for the primary object placed in the game space (e.g., the mesh of the terrain object). The primary mesh data is data that represents the position of each vertex of the primary mesh, for example.

The sub-voxel space data is data that defines the sub-voxel space set in the game space. Specifically, the sub-voxel space data represents the position and the size of the space in which the sub-voxel is set (the sub-voxel space), the length of one side of the sub-voxel, and the direction of each side of the sub-voxel in the game space.

The sub-voxel object data is data that represents the sub-object placed in the game space (e.g., the broken piece object). Specifically, the sub-voxel object data includes sub-voxel data for each unit region for a partial or entire range of the game space.

The sub-mesh data is data that represents the mesh set for the sub-object placed in the game space (e.g., the mesh of the broken piece object). The sub-mesh data includes data that represents the position of each vertex of the sub-mesh, for example.

Note that in the present embodiment, the set of sub-voxel space data, sub-voxel object data and sub-mesh data is set for each sub-object. For example, where a plurality of sub-objects are placed in the game space, the game system 1 stores the set for each sub-obj ect.

Note that as data stored in advance on the game system 1 before executing the game process, the game system 1 stores, in addition to the data shown in FIG. 19, data of the property information and the texture information described above, data of the broken piece generation information described above, data related to various characters to appear in the game, etc.

FIG. 20 is a flow chart showing an example of the flow of the game process to be executed by the game system 1. The game process shown in FIG. 20 is started in response to the player giving an instruction to start the game during execution of the game program, for example.

Note that in the present embodiment, it is assumed that the processor 81 of the main body apparatus 2 executes the processes of the steps shown in FIG. 20 to FIG. 22 by executing the game program stored in the game system 1. Note however that in other embodiments, some of the processes of the steps may be executed by another processor (e.g., a dedicated circuit) different from the processor 81. When the game system 1 can communicate with another information processing apparatus (e.g., a server), some of the processes of the steps shown in FIG. 20 to FIG. 22 may be executed on the other information processing apparatus. The processes of the steps shown in FIG. 20 to FIG. 22 are merely illustrative, and the order of steps to be performed may be switched around or other processes may be executed in addition to (or instead of) the processes of the steps, as long as similar results are obtained.

The processor 81 executes the processes of the steps shown in FIG. 20 to FIG. 22 using a memory (e.g., the DRAM 85). Specifically, the processor 81 stores information (in other words, data) obtained in each process step in the memory, and when the information is used in a subsequent process step, the information is read out from the memory and used.

In step S1 shown in FIG. 20, the processor 81 sets a primary voxel space in the game space. Specifically, the processor 81 obtains the primary voxel space data and stores (in other words, writes) the data in the DRAM 85. Note that in the subsequent game process, the processor 81 may refer to the primary voxel space data when executing processes (e.g., the process of step S2, etc.) related to the terrain object. In this case, the processor 81 refers to the primary voxel space data stored in the DRAM 85. The process of step S2 is executed, following step S1.

In step S2, the processor 81 sets a terrain object in the initial state in the game space. Specifically, the processor 81 obtains voxel data that represents the arrangement of the terrain object in the initial state, and stores (in other words, writes) a part or whole of the obtained voxel data in the DRAM 85 as the primary voxel object data. Note that the voxel data representing the arrangement of the terrain object in the initial state is stored in the storage medium attached to the slot 23 of the main body apparatus 2, for example. The process of step S3 is executed, following step S2.

Note that the voxel data, which is written in the DRAM 85 as the primary voxel object data, may be primary voxel data for a partial range used for generating the game image, of the primary voxel data for the entire range of the game space. The processor 81 may generate an image of the object using the primary voxel data only for a partial range of the game space (e.g., a range within a predetermined distance from the position of the virtual camera), for example. In this process, the primary voxel object data may include voxel data in this range. When the primary voxel data for a partial range of the game space is written, a process similar to step S2 described above is executed at an appropriate timing during execution of the series of processes of steps S4 to S10 to be described below (e.g., at a timing when the position of the virtual camera has moved a predetermined distance or more).

In step S3, the processor 81 generates a mesh for the terrain object. The mesh is generated according to the method described in "[2-2. Mesh]" above. Here, the processor 81 generates a mesh based on the primary voxel object data stored in the DRAM 85, and stores the mesh in the DRAM 85 as the primary mesh data. By the process of step S3, the terrain object is constructed in the game space. After step S3 described above, the game is started, and the series of processes of steps S4 to S 10 is repeatedly executed during the game.

In step S4, the processor 81 controls the action of various objects (e.g., the player object and enemy objects) appearing in the game space. For example, the processor 81 controls the action of the player object based on the operation data received from the controllers 3 and 4, and controls the action of enemy objects based on an algorithm predetermined in the game program. The process of step S5 is executed, following step S4.

In step S5, the processor 81 determines whether the impact-imparting event described above has occurred as a result of step S4. If the determination result from step S5 is affirmative, the process of step S6 is executed. On the other hand, if the determination result from step S5 is negative, the process of step S7 is executed, skipping the process of step S6.

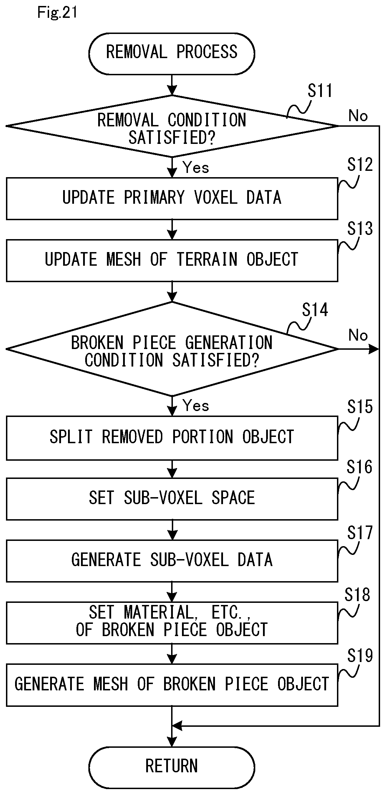

In step S6, the processor 81 executes the removal process for removing a portion of the terrain object. Referring to FIG. 21, the detailed flow of the removal process will now be described.

FIG. 21 is a sub-flow chart showing an example of the detailed flow of a removal process of step S6 shown in FIG. 20. In the removal process, first, in step S11, the processor 81 determines whether the removal condition described above is satisfied as a result of step S4. Note that as described above, the determination of the removal condition is made for each primary voxel, and the determination result becomes affirmative in the determination of step S4 if the removal condition is satisfied for at least one primary voxel. If the determination result from step S11 is affirmative, the process of step S12 is executed. On the other hand, if the determination result from step S11 is negative, the processor 81 ends the removal process shown in FIG. 21.

In step S12, the processor 81 updates the primary voxel data stored in the DRAM 85 so as to remove a portion of the terrain object. Specifically, the processor 81 removes a portion of the terrain object by the method described in "[2-3-2. Removal of terrain obj ect]" above. The process of step S13 is executed, following step S12 is executed.

In step S13, the processor 81 updates the mesh for the terrain object for which the primary voxel data has been changed in step S12. The processor 81 generates the mesh of the terrain object based on the primary voxel object data as updated in step S12. Thus, the mesh of the terrain object can be dynamically changed in the game. Note that the processor 81 updates the primary mesh data stored in the DRAM 85 to content that represents the newly generated mesh. The process of step S14 is executed, following step S13 is executed.

In step S14, the processor 81 determines whether the broken piece generation condition described above is satisfied as a result of step S4. Specifically, the processor 81 sets the broken piece generation condition based on the type of the removal event according to the method described in "[2-3-3. Broken piece generation condition]" above, and determines whether the broken piece generation condition, which has been set, is satisfied. If the determination result from step S14 is affirmative, the process of step S15 is executed. On the other hand, if the determination result from step S14 is negative, the processor 81 ends the removal process shown in FIG. 21.

In step S15, the processor 81 splits the removed portion object described above (see FIG. 16). For example, the processor 81 first determines information of the size level and the upper limit number of broken piece objects, and executes the process of splitting the removed portion object based on the determined information. The splitting process in step S15 is performed according to the method described in "[2-3-4. Generation of broken piece object]" above. The process of step S16 is executed, following step S15.

In step S16, the processor 81 sets the sub-voxel space related to the broken piece object to be generated. The setting of the sub-voxel space is performed according to the method described in "[2-3-4. Generation of broken piece object]" above. In this process, the processor 81 stores the sub-voxel space data that defines the sub-voxel space, which has been set, in the DRAM 85. The process of step S17 is executed, following step S16.

In step S17, the processor 81 generates the sub-voxel data representing the broken piece object obtained in the splitting process in step S15. Specifically, the processor 81 generates sub-voxel data of the sub-voxel in the sub-voxel space set in step S16, which represents the broken piece obj ect generated in step S15. The processor 81 stores sub-voxel object data including the generated sub-voxel data in the DRAM 85. Note that the sub-voxel data generated in step S17 only needs to include the density data and does not need to include the material data and the state data. The process of step S18 is executed, following step S17.

In step S18, the processor 81 sets the material and the state of the generated broken piece object. For example, the processor 81 sets the material and the state of the broken piece object according to the method described "[2-3-4. Generation of broken piece object]" above, and updates the sub-voxel data of the sub-voxel object data stored in the DRAM 85 so as to represent the content, which has been set. The process of step S19 is executed, following step S18.

In step S19, the processor 81 generates a mesh of the broken piece object. For example, the processor 81 generates a mesh of the broken piece object based on the sub-voxel data by a method similar to the method for generating a mesh of the terrain object. The processor 81 stores the data representing the mesh of the generated broken piece object in the DRAM 85 as the sub-mesh data. After step S19, the processor 81 ends the removal process shown in FIG. 21.

Note that if a plurality of broken piece objects are generated in step S15 (split into a plurality of objects), the series of processes of steps S16 to S19 is executed for the plurality of broken piece objects.

Referring back to FIG. 20, the process of step S7 is executed, following the removal process of step S6. In step S7, the processor 81 determines whether the broken piece object has contacted the terrain object as a result of step S4. If the determination result from step S7 is affirmative, the process of step S8 is executed. On the other hand, if the determination result from step S7 is negative, the process of step S9 to be described below is executed, skipping the process of step S8.

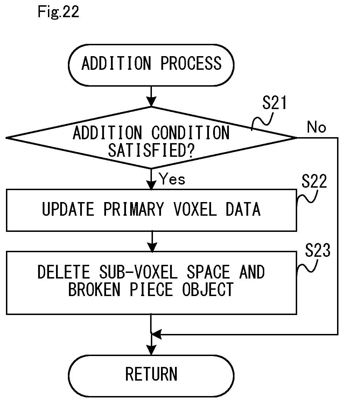

In step S8, the processor 81 executes the addition process for making an addition to the terrain object. Referring to FIG. 22, the detailed flow of the addition process will now be described.

FIG. 22 is a sub-flow chart showing an example of the detailed flow of an addition process of step S8 shown in FIG. 20. In the addition process, first, in step S21, the processor 81 determines whether the addition condition described above is satisfied as a result of step S4. If the determination result from step S21 is affirmative, the process of step S22 is executed. On the other hand, if the determination result from step S21 is negative, the processor 81 ends the addition process shown in FIG. 22.

In step S22, the processor 81 updates the primary voxel data so as to make an addition to the terrain object based on the broken piece object that has contacted the terrain object. Specifically, the processor 81 updates the primary voxel data according to the method described in "[2-3-5. Addition to terrain object by broken piece object]" above. The processor 81 updates the primary voxel object data stored in the DRAM 85 so as to include the updated primary voxel data. The process of step S23 is executed, following step S22.

In step S23, the processor 81 deletes the broken piece object that has contacted the terrain object, and removes the sub-voxel space related to the broken piece object from the game space. Specifically, the processor 81 deletes the sub-voxel space data, the sub-voxel object data and the sub-mesh data related to the broken piece object from the DRAM 85. After step S23, the processor 81 ends the addition process shown in FIG. 22.

Referring back to FIG. 20, the process of step S9 is executed, following the addition process of step S8. In step S9, the processor 81 generates a game image representing the game space and displays the game image on the display device. Specifically, the processor 81 generates the game image representing the game space including voxel objects and other objects (e.g., the player object and enemy objects). Note that the image of the voxel object is generated according to the method described in "[2-2. Mesh]" above by using the primary voxel object data, the primary mesh data, the sub-voxel object data and the sub-mesh data stored in the DRAM 85. The processor 81 displays the generated game image on the display device. Note that during the game, the process of step S9 is repeatedly executed at a rate of once per a predetermined amount of time (e.g., one frame period). The process of step S10 is executed, following step S9.

In step S10, the processor 81 determines whether or not to end the game. For example, the processor 81 determines whether an instruction to end the game has been given by the user. If the determination result from step S10 is negative, the process of step S4 is executed again. Thereafter, the series of processes of steps S4 to S10 is executed repeatedly until it is determined to end the game in step S10. On the other hand, if the determination result from step S10 is affirmative, the processor 81 ends the game process shown in FIG. 20.

### [4. Functions/effects of present embodiment and variations]

As described above, in the embodiment described above, the information processing system (specifically, the game system 1) is configured to include the following units.
· a primary object generator (step S3) configured to generate a mesh of a primary object (e.g., a terrain object) in a virtual space based on primary voxel data for each primary voxel defined in a primary voxel space, which is a voxel space set in the virtual space;
· a primary voxel updater (step S13) configured to, when a removal event occurs for at least some of a plurality of primary voxels in the primary voxel space, update the primary voxel data of a removal target voxel, which is a primary voxel where the removal event has occurred, so as to remove at least a portion of the primary object that corresponds to the removal target voxel;
· a broken piece determinator (step S14) configured to, when a removal event occurs, determine whether a broken piece generation condition is satisfied based on property data related to the removal target voxel among property data that represents a property (specifically, strength) of a primary object for each primary voxel;
· a sub-object generator (step S17, S19) configured to, when it is determined that the broken piece generation condition is satisfied, generate sub-voxel data, which is voxel data for each sub-voxel defined in a sub-voxel space different from the primary voxel space, which is a voxel space set in the virtual space, and which is voxel data of a sub-object (e.g., a broken piece object), and generates a mesh of the sub-object in the virtual space based on the sub-voxel data; and
· an image outputter (step S9) configured to output, to a display device, an image of the mesh of the primary object and the mesh of the sub-object in the virtual space.

With the configuration described above, as the sub-object representing the broken piece of the primary voxel is represented by the sub-voxel data related to the sub-voxel space different from the primary voxel space, it is possible to realistically render broken pieces when the primary object is broken.

With the configuration described above, as the broken piece generation condition is determined based on the property data related to the removal target voxel, the determination whether a sub-object representing a broken piece is generated can be varied for each primary object removed, and can be varied for each position of the removed portion of the primary object. Thus, it is possible to more realistically render a broken piece when the primary object is broken. Note that in other embodiments, the game system 1 may determine the broken piece generation condition not based on the property data. For example, the game system 1 may determine the broken piece generation condition based on the type of the removal event described above but not based on the property data.

In the embodiment described above, the primary object is a terrain object placed in the virtual space. Here, in other embodiments, the primary object may be any object in the virtual space. For example, the primary object may be the player object or an enemy object, or may be an object that can move around in the virtual space such as a vehicle object on which the player object, etc., can ride. With the game system 1, a plurality of different types of objects may each be a primary object.

In the embodiment described above, the determination of whether or not a voxel object and another object have contacted each other (e.g., a so-called collision determination) is made by the unit of voxels. That is, the game system 1 determines that a voxel object and the other object have contacted each other if the other object (e.g., a collision determination range set for the other object) is included in a voxel of which the density is equal to or greater than a predetermined value, among voxels in the game space. Thus, it is possible to reduce the process burden for the collision determination. Note however that in other embodiments, the game system 1 may perform a collision determination using the mesh of the voxel object. For example, the game system 1 may determine that the voxel object and the other object contact each other when the mesh of the voxel object and the other object contact each other.

Note that in other embodiments, the information processing system (specifically, the game system 1) does not need to include one or more of the components of the embodiment described above and does not need to execute one or more of the processes that are executed in the embodiment described above. For example, in order to realize a specific one of the advantageous effects of the embodiment described above, the information processing system may include a component or components for realizing the specific advantageous effect and execute a process or processes for realizing the specific advantageous effect, and the game system does not need to include other components and does not need to execute other processes.

The embodiment described above can be used as, for example, a game system or a game program, with the aim of, for example, generating an object that represents a portion of an object that has been broken, for example.

## Claims

1. An information processing program that causes a computer (81) of an information processing device (1) to function as:
primary object generate means (81, S3) for generating a mesh of a primary object in a virtual space based on primary voxel data for each primary voxel defined in a primary voxel space, which is a voxel space set in the virtual space;
primary voxel update means (81, S13) for, when a removal event occurs for at least some of a plurality of primary voxels in the primary voxel space, updating the primary voxel data of a removal target voxel, which is a primary voxel where the removal event has occurred, so as to remove at least a portion of the primary object that corresponds to the removal target voxel;
broken piece determinine means (81, S14) for, when the removal event occurs, determining whether a broken piece generation condition is satisfied based on property data related to the removal target voxel among property data that represents a property of a primary object for each primary voxel;
sub-object generate means (81, S17, S19) for, when it is determined that the broken piece generation condition is satisfied, generating sub-voxel data and generating a mesh of a sub-object in the virtual space based on the sub-voxel data, the sub-voxel data being voxel data of the sub-object defined for each sub-voxel defined in a sub-voxel space, and the sub-voxel space being set in the virtual space and different from the primary voxel space; and
image output means (81, S9) for outputting, to a display device, an image of the mesh of the primary object and the mesh of the sub-object in the virtual space.

2. The information processing program according to claim 1, wherein the information processing program further causes the computer to function as: appearance set means (81, S9) for setting a color and/or pattern of a mesh of the primary object based on appearance data that defines the color and/or pattern of the primary object for each primary voxel.

3. The information processing program according to claim 2, wherein:
the appearance data is data representing a texture; and
the appearance set means applies the texture represented by the appearance data related to a certain primary voxel to a mesh, of the meshes of the primary object, that is generated based on the voxel data of the certain primary voxel.

4. The information processing program according to claim 2 or 3, wherein the sub-object generate means determines, based on the appearance data set for a removed portion of the primary object, the appearance data set for the sub-voxel related to the sub-obj ect.

5. The information processing program according to any one of claims 1 to 4, wherein the sub-object generate means determines, based on the property data set for a removed portion of the primary object, the property data set for the sub-voxel related to the sub-obj ect.

6. The information processing program according to any one of claims 1 to 5, wherein the information processing program further causes the computer to function as number determine means (81, S15) for determining, based on a type of the removal event that has occurred, the number of sub-objects to be generated, and
when it is determined to generate a plurality of sub-objects, the sub-object generate means determines generates the sub-voxel data related to each sub-object for each of the sub-voxel spaces independent of each other, and generates a mesh of the sub-object in the virtual space based on the sub-voxel data.

7. The information processing program according to any one of claims 1 to 6, wherein the broken piece determinine means executes, based on a type of the removal event that has occurred, the setting of a condition to be used as the broken piece generation condition and/or the determination of whether the broken piece generation condition is satisfied.

8. The information processing program according to any one of claims 1 to 7, wherein:
the property data represents a strength of the primary object; and
the broken piece determinine means determines, based on a strength depending on the type of the removal event that has occurred and a strength that is represented by the property data set for the removal target voxel where the removal event has occurred, whether the broken piece generation condition is satisfied.

9. The information processing program according to any one of claims 1 to 8, wherein:
the property data represents a strength of the primary object; and
when an impact-imparting event that imparts an impact on the primary object is performed, the broken piece determinine means determines, based on a strength of the impact-imparting event, which is set according to the type of the impact-imparting event, and a strength represented by the property data, which is set for the primary voxel where the impact-imparting event has been performed, whether the removal event occurs.

10. The information processing program according to any one of claims 1 to 9, wherein the sub-object generate means generates the sub-voxel data so that the sub-object has a size in accordance with the type of the removal event that has occurred.

11. The information processing program according to any one of claims 1 to 10, wherein when it is determined that the broken piece generation condition is satisfied, the sub-object generate means generates a removed portion object that represents a removed portion of the primary object, and generates the sub-object by splitting the removed portion object into a plurality of pieces.

12. The information processing program according to claim 11, wherein the sub-object generate means generates the sub-voxel data so that of all objects obtained by splitting the removed portion object into a plurality of pieces, an object that is larger than a lower limit value and smaller than an upper limit value is the sub-object.

13. The information processing program according to any one of claims 1 to 12, wherein the sub-object generate means sets the sub-voxel space in which a voxel of which a length of one side is shorter than the primary voxel is defined as the sub-voxel.

14. The information processing program according to any one of claims 1 to 13, wherein the sub-object generate means sets directions of coordinate axes in the sub-voxel space independently of directions of coordinate axes in the primary voxel space.

15. An information processing system comprising:
primary object generate means (81, S3) for generating a mesh of a primary object in a virtual space based on primary voxel data for each primary voxel defined in a primary voxel space, which is a voxel space set in the virtual space;
primary voxel update means (81, S13) for, when a removal event occurs for at least some of a plurality of primary voxels in the primary voxel space, updating the primary voxel data of a removal target voxel, which is a primary voxel where the removal event has occurred, so as to remove at least a portion of the primary object that corresponds to the removal target voxel;
broken piece determinine means (81, S14) for, when the removal event occurs, determining whether a broken piece generation condition is satisfied based on property data related to the removal target voxel among property data that represents a property of a primary object for each primary voxel;
sub-object generate means (81, S17, S19) for, when it is determined that the broken piece generation condition is satisfied, generating sub-voxel data and generating a mesh of a sub-object in the virtual space based on the sub-voxel data, the sub-voxel data being voxel data of the sub-object defined for each sub-voxel defined in a sub-voxel space, and the sub-voxel space being set in the virtual space and different from the primary voxel space; and
image output means (81, S9) for outputting, to a display device, an image of the mesh of the primary object and the mesh of the sub-object in the virtual space.

16. An information processing apparatus comprising:
primary object generate means (81, S3) for generating a mesh of a primary object in a virtual space based on primary voxel data for each primary voxel defined in a primary voxel space, which is a voxel space set in the virtual space;
primary voxel update means (81, S13) for, when a removal event occurs for at least some of a plurality of primary voxels in the primary voxel space, updating the primary voxel data of a removal target voxel, which is a primary voxel where the removal event has occurred, so as to remove at least a portion of the primary object that corresponds to the removal target voxel;
broken piece determinine means (81, S14) for, when the removal event occurs, determining whether a broken piece generation condition is satisfied based on property data related to the removal target voxel among property data that represents a property of a primary object for each primary voxel;
sub-object generate means (81, S17, S19) for, when it is determined that the broken piece generation condition is satisfied, generating sub-voxel data and generating a mesh of a sub-object in the virtual space based on the sub-voxel data, the sub-voxel data being voxel data of the sub-object defined for each sub-voxel defined in a sub-voxel space, and the sub-voxel space being set in the virtual space and different from the primary voxel space; and
image output means (81, S9) for outputting, to a display device, an image of the mesh of the primary object and the mesh of the sub-object in the virtual space.

17. An information processing method performed on an information processing system (1), the information processing method comprising:
primary object generate step (S3) for generating a mesh of a primary object in a virtual space based on primary voxel data for each primary voxel defined in a primary voxel space, which is a voxel space set in the virtual space;
primary voxel update step (S13) for, when a removal event occurs for at least some of a plurality of primary voxels in the primary voxel space, updating the primary voxel data of a removal target voxel, which is a primary voxel where the removal event has occurred, so as to remove at least a portion of the primary object that corresponds to the removal target voxel;
broken piece determinine step (S14) for, when the removal event occurs, determining whether a broken piece generation condition is satisfied based on property data related to the removal target voxel among property data that represents a property of a primary object for each primary voxel;
sub-object generate step (S17, S19) for, when it is determined that the broken piece generation condition is satisfied, generating sub-voxel data and generating a mesh of a sub-object in the virtual space based on the sub-voxel data, the sub-voxel data being voxel data of the sub-object defined for each sub-voxel defined in a sub-voxel space, and the sub-voxel space being set in the virtual space and different from the primary voxel space; and
image output step (S9) for outputting, to a display device, an image of the mesh of the primary object and the mesh of the sub-object in the virtual space.
